# EUROPEAN PATENT APPLICATION

(11) **EP 4 497 359 A1**
(43) Date of publication of application: **29.01.2025**
(21) Application number: 24166168.5
(22) Date of filing: 26.03.2024
(51) Int. Cl.: A47L 1/02, A47L 11/40

(54) **WINDOW CLEANING MACHINE**

(30) Priority: 24.07.2023 CN 202310906390; 30.11.2023 CN 202311623255
(71) Applicant: Hobot Technology Inc., Chupei City, Hsinchu County 30274 (TW)
(72) Inventor: CHAO, CHI-MOU, 302 Zhubei City (TW); WU, HSIN-HUI, 302 Zhubei City (TW); LIN, Chia-Chin, 302 Zhubei City (TW)
(74) Representative: Lang, Christian

(57) **Abstract**

A window cleaning machine provided according to an embodiment of the disclosure comprises a resilient member disposed between a body and a first cleaning device to prevent external air from passing between the body and the first cleaning device and entering a primary suction space of the body.

## Description

### BACKGROUND OF THE INVENTION

### CROSS-REFERENCE TO RELATED APPLICATION

This non-provisional application claims priority under 35 U.S.C. §119(a) on Patent Application No. 202310906390.8 filed in China on July 24, 2023, and No. 202311623255.9 filed in China on November 30, 2023 entitled "self-moving cleaner", the entire contents of which are hereby incorporated by reference.

### FIELD OF THE INVENTION

The present disclosure relates to cleaning equipment technology, and more particularly to a window cleaning machine capable of walking across a non-horizontal pane surface.

### DESCRIPTION OF THE PRIOR ART

Existing ways to clean residential windows fall into two categories: opening windows to clean or removing windows to clean. By contrast, external surfaces of the windows of business buildings are scrubbed with brushes or washed with water jets - a task performed by window cleaning workers carried by suspended platforms hung from the top of the business buildings. The ascent and descent of the suspended platforms are controlled with electric machines. However, the suspended platforms are inherently predisposed to instability and thus likely to be swayed by wind. Furthermore, the external surfaces of the windows of business buildings are not cleaned completely, as they are rinsed rather than excessively scrubbed and washed, for safety's sake, to prevent the window cleaning workers from slipping or cleaning tools from falling off and leading to injury of pedestrians.

Chinese published patent application CN113928434A discloses a window cleaning machine comprising a body, walking module, air extracting module, suction cup, and air pressure sensors. The body defines a primary suction space and a second space in communication with the primary suction space. The second space is of a smaller capacity than the primary suction space. The second space is closer to the periphery of the body than the primary suction space. The walking module is disposed near the body. The air extracting module is disposed on the body and is in communication with the primary suction space. The air pressure sensors are disposed on the body and located at one end of the second space respectively. The window cleaning machine walks across the surface of a windowpane. According to the prior art, the window cleaning machine detects an air leak from the suction cup and determines that it is going to fall off as soon as the window cleaning machine moves beyond the edge of the windowpane, causing the window cleaning machine to stop moving beyond the edge of the windowpane.

However, if a conventional window cleaner robot collides with an edge of a windowpane while it is walking across the windowpane, it is informed of the collision only by means of a walking module capable of sensing resistance. Moreover, owing to the collision, its suction cup bends upward and thus ends up with a gas leak, resulting in its failure to cling firmly to the windowpane surface by suction. Therefore, the conventional window cleaner robot has to be improved in order for it to confirm its collision with an obstacle or an edge of the windowpane and thus stop moving beyond the edge of the windowpane.

### SUMMARY OF THE INVENTION

A window cleaning machine provided according to an embodiment of the disclosure comprises a resilient member disposed between a body and a first cleaning device to prevent external air from passing between the body and the first cleaning device and entering a primary suction space of the body.

In this embodiment, the window cleaning machine is adapted to walk across a non-horizontal pane surface. The window cleaning machine comprises a body, walking module, air extracting module, first cleaning device, and driving device. The body defines a primary suction space. The walking module is disposed near the body. The air extracting module is disposed on the body and is in communication with the primary suction space. The first cleaning device is in contact with the pane surface while performing a cleaning operation. The driving device is connected to the first cleaning device to drive the first cleaning device undergoing a reciprocating motion and wiping the pane surface back and forth. The first cleaning device defines a first subsidiary space, allowing the first subsidiary space to come into communication with the primary suction space and the primary suction space to form an airtight space when the first cleaning device comes into contact with the pane surface. The first cleaning device comprises a first suction cup wall portion enclosing the first subsidiary space. The body further comprises a first resilient member. The first resilient member defines a first through hole, and the first suction cup wall portion is disposed in the first through hole.

In an embodiment, the first resilient member is in contact with the first cleaning device, and at least one smooth layer is disposed between the first resilient member and the first cleaning device.

In an embodiment, the at least one smooth layer comprises a first smooth layer, whereas the first resilient member comprises a first smooth layer and a resilient layer, with the first smooth layer adhered to the resilient layer.

In an embodiment, at least one smooth layer comprises a second smooth layer. The first cleaning device comprises a second smooth layer. The first smooth layer is in contact with the second smooth layer. The first smooth layer moves relative to the second smooth layer.

In an embodiment, the first cleaning device compresses the first resilient member to reduce external air passing between the first cleaning device and the body and entering the primary suction space while the first cleaning device is undergoing a reciprocating motion relative to the body.

In an embodiment, the body further comprises a carrying board, and the carrying board defines a first penetrating hole. The first suction cup wall portion is configured to be inserted into the first penetrating hole and undergo a reciprocating motion within the first penetrating hole. The first resilient member is disposed between the first cleaning device and the carrying board. The first cleaning device is configured to undergo a reciprocating motion relative to the carrying board.

In an embodiment, the body further comprises a first suction cup cover. The first suction cup cover is disposed on the first side of the carrying board. The first cleaning device is disposed on the second side of the carrying board. The first suction cup cover is fixed to the first suction cup wall portion, allowing the first cleaning device to be attached to the carrying board.

In an embodiment, when attached to the carrying board, the first cleaning device compresses the first resilient member to reduce external air passing between the first cleaning device and the carrying board and entering the primary suction space while the first cleaning device is undergoing a reciprocating motion relative to the carrying board.

In an embodiment, the window cleaning machine further comprises a second cleaning device. The second cleaning device is in contact with the pane surface while performing a cleaning operation. The driving device is connected to the second cleaning device to cause the second cleaning device to undergo a reciprocating motion so as to wipe the pane surface back and forth. The second cleaning device defines a second subsidiary space, allowing the second subsidiary space to come into communication with the primary suction space and the primary suction space to form an airtight space when the second cleaning device comes into contact with the pane surface.

In an embodiment, the driving device causes the first cleaning device to undergo a reciprocating motion in a first direction and causes the second cleaning device to undergo a reciprocating motion in a second direction opposite to the first direction.

In an embodiment, the carrying board further defines a second penetrating hole. The second cleaning device comprises a second suction cup wall portion enclosing the second subsidiary space. The second suction cup wall portion is configured to be inserted into the second penetrating hole and undergo a reciprocating motion within the second penetrating hole. The body further comprises a second resilient member. The second resilient member is disposed between the second cleaning device and the carrying board. The second resilient member defines a second through hole, and the second suction cup wall portion is disposed in the second through hole. The body further comprises a second suction cup cover. The second suction cup cover is disposed on the first side of the carrying board. The second cleaning device is disposed on the second side of the carrying board. The second suction cup cover is fixed to the second suction cup wall portion, allowing the second cleaning device to be attached to the carrying board. When attached to the carrying board, the second cleaning device compresses the second resilient member to reduce external air passing between the second cleaning device and the carrying board and entering the primary suction space while the second cleaning device is undergoing a reciprocating motion relative to the carrying board.

In an embodiment, the first cleaning device comprises a first suction cup and a first cleaning fabric. The first suction cup defines a first subsidiary space and is connected to the driving device. The first cleaning fabric is disposed at the first suction cup. The second cleaning device comprises a second suction cup and a second cleaning fabric. The second suction cup defines a second subsidiary space and is connected to the driving device. The second cleaning fabric is disposed at the second suction cup.

In an embodiment, the body further comprises a bottom board disposed near an upper portion of the body and comprising a bottom board wall portion enclosing a first bottom board through hole. The carrying board is disposed between the first cleaning device and the bottom board and disposed between the second cleaning device and the bottom board. The carrying board is connected to the bottom board.

In an embodiment, the first cleaning fabric and the second cleaning fabric expose the first subsidiary space and the second subsidiary space respectively, or the first cleaning fabric and the second cleaning fabric cover the first subsidiary space and the second subsidiary space respectively, and both the first cleaning fabric and the second cleaning fabric are made of a gas-permeable material.

### BRIEF DESCRIPTION OF THE DRAWINGS

The disclosure is illustrated by embodiments, depicted by accompanying drawings, and described below. The accompanying drawings are not drawn to scale, depending on standards accepted in related art. For the sake of clear illustration, the dimensions of parts and components shown in the accompanying drawings may be increased or decreased as desired.
FIG. 1 is an exploded view of a window cleaning machine in an embodiment of the disclosure.
FIG. 2 is an exploded view of a body of the window cleaning machine in an embodiment of the disclosure, showing a bottom board and a carrying board of the body.
FIG. 3 is an exploded view of the window cleaning machine in an embodiment of the disclosure, showing the carrying board, a first cleaning device and a second cleaning device.
FIG. 4 is a bottom view of the window cleaning machine in an embodiment of the disclosure.
FIG. 5 is an exploded view of the window cleaning machine in an embodiment of the disclosure, showing the bottom board, carrying board, first cleaning device and second cleaning device.
FIG. 6 is an exploded view of a driving device in an embodiment of the disclosure.
FIG. 7 is a perspective view of a first resilient member in an embodiment of the disclosure.
FIG. 8 is a cross-sectional view of the window cleaning machine disposed on a pane in an embodiment of the disclosure.
FIG. 9 is an exploded view of the window cleaning machine in an embodiment of the disclosure, showing the bottom board, carrying board, first cleaning device and second cleaning device.
FIG. 10 is an exploded view of the driving device in an embodiment of the disclosure.
FIG. 11 is an exploded view of the window cleaning machine in an embodiment of the disclosure, showing the carrying board, first cleaning device and second cleaning device.

### DETAILED DESCRIPTION OF THE EMBODIMENTS

The disclosure relates to a window cleaning machine capable of clinging to a non-horizontal pane surface, such as oblique pane surface or vertical pane surface, by suction and moving across the oblique pane surface or vertical pane surface without falling off under gravity. In an embodiment, the window cleaning machine is a toy, remotely controlled vehicle, cleaner or window washing machine. The cleaner or window washing machine serves a cleaning purpose, cleaning a pane surface it clings thereto by suction while moving back and forth across the pane surface. Embodiments of the disclosure are hereunder exemplified by the cleaner or window washing machine, but the disclosure is not limited thereto.

### [First Embodiment]

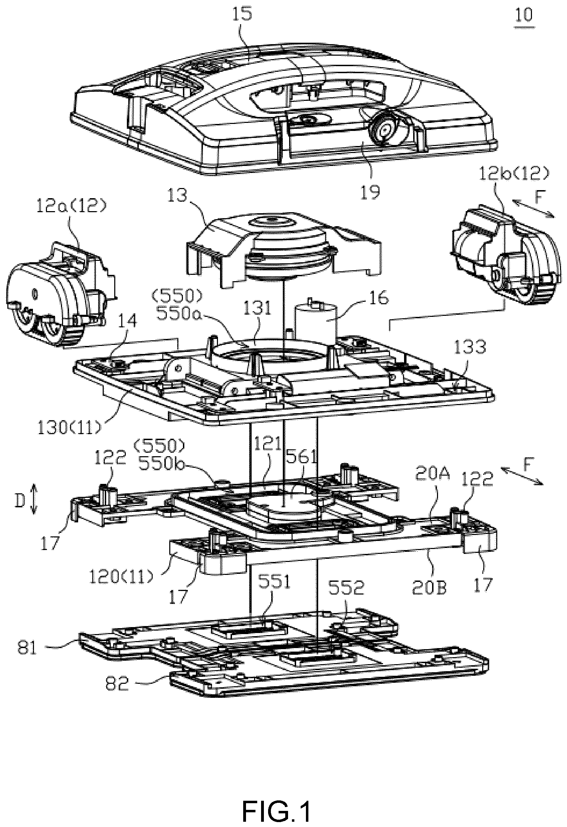

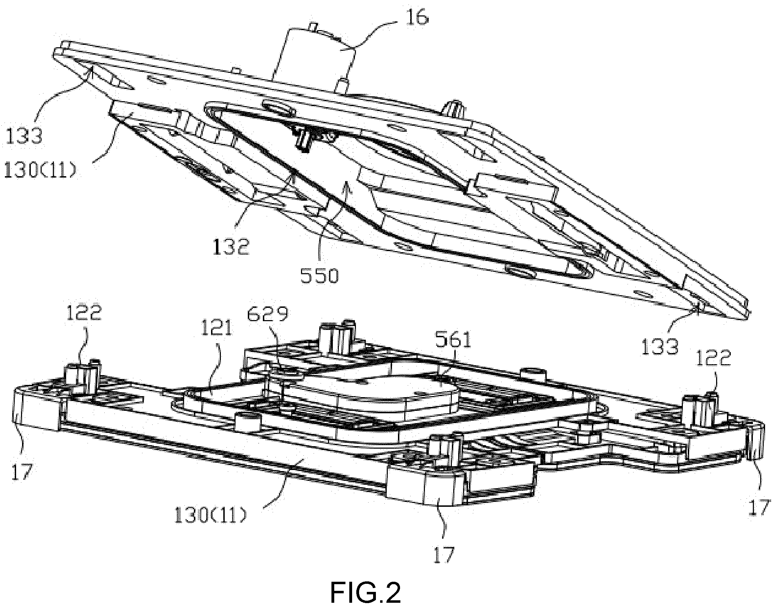

FIG. 1 is an exploded view of a window cleaning machine in an embodiment of the disclosure. FIG. 2 is an exploded view of a body of the window cleaning machine in an embodiment of the disclosure, showing a bottom board and a carrying board of the body. In an embodiment illustrated by FIG. 1 and FIG. 2, a window cleaning machine 10 comprises at least one bump structure 17, body 11, walking module 12, and air extracting module 13. In an embodiment illustrated by FIG. 1, the window cleaning machine 10 comprises multiple bump structures 17. The walking modules 12 are disposed at two opposing ends of the body 11 respectively. The air extracting modules 13 are disposed on the body 11. The bump structures 17 are configured to sense a collision between the window cleaning machine 10 and an obstacle and thereby instruct the window cleaning machine 10 to stop advancing. The window cleaning machine 10 further comprises a driving device 16, first cleaning device 81, and second cleaning device 82. The window cleaning machine 10 is a self-moving cleaner.

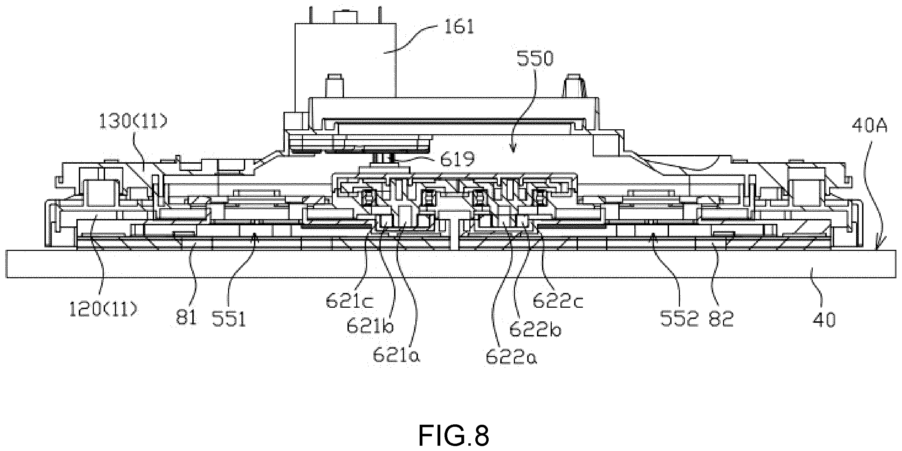

FIG. 8 is a cross-sectional view of the window cleaning machine disposed on a pane in an embodiment of the disclosure. In an embodiment, the window cleaning machine 10 is adapted to cling to a pane 40 (as shown in FIG. 8), and the walking module 12 walks across a pane surface 40A so as to remove dust or smears from the pane surface 40A. In an embodiment, the pane 40 is a vertical pane, an oblique pane or a non-horizontal pane. As shown in FIG. 1, the walking module 12 comprises a walk component 12a and a walk component 12b, which are components capable of moving, such as pulleys and rollers, for driving the window cleaning machine 10 to move across the pane surface 40A, for example, advancing, reversing, and turning. In the aforesaid embodiment, the walk component 12a and the walk component 12b are pulleys comprising tracks and two driving wheels for driving the tracks.

The body 11 and the air extracting module 13 are coupled together to allow the window cleaning machine 10 to cling to the pane surface 40A by suction while moving across the pane 40 not lying horizontally. In an embodiment, the body 11 comprises a carrying board 120 and a bottom board 130 stacked on top of the carrying board 120 to allow the bottom board 130 to be positioned proximate to the upper portion of the body 11, and the carrying board 120 to be positioned proximate to the lower portion of the body 11. In an embodiment, the walking module 12 is connected to the body 11, or to be more specific, disposed in the body 11 or directly rested on the body 11. In an embodiment, the bump structures 17 are disposed at lateral sides of the carrying board 120 respectively, and the walking modules 12 are disposed near the two ends of the carrying board 120 respectively. The air extracting module 13 is disposed on the bottom board 130 and extracts air in the direction from the bottom board 130 to the air extracting module 13; as a result, the air in the vicinity of the pane surface 40A is extracted from the pane surface 40A via the first cleaning device 81, second cleaning device 82, carrying board 120 and bottom board 130 and then drawn out of the air extracting module 13, allowing a negative pressure to exist between the window cleaning machine 10 and the pane surface 40A. Thus, the atmospheric pressure presses down on the window cleaning machine 10 to enable the window cleaning machine 10 to cling to the pane surface 40A by suction. In an embodiment, the air extracting module 13 comprises a pump.

Specifically speaking, a negative-pressure space is formed between the pane surface 40A, body 11, and air extracting module 13 and adapted to enable the window cleaning machine 10 to move across a pane not lying horizontally without falling off. In an embodiment, the negative-pressure space is further divided into a primary suction space 550 defined by the body 11, a first subsidiary space 551, and a second subsidiary space 552. The primary suction space 550 is in communication with the first subsidiary space 551 and the second subsidiary space 552. The primary suction space 550 is defined by the carrying board 120 and the bottom board 130. The first subsidiary space 551 and the second subsidiary space 552 are defined by the first cleaning device 81, second cleaning device 82, and carrying board 120.

In an embodiment, the window cleaning machine 10 further comprises air pressure sensors (not shown) for measuring the air pressure inside the window cleaning machine 10, or to be more specific, in an embodiment, measuring the air pressure inside the primary suction space 550 to measure the state of a negative pressure generated by the air extraction performed by the air extracting module 13. Therefore, the window cleaning machine 10 can determine whether the hermetic seal of the primary suction space has been compromised whenever the negative-pressure state has changed.

In an embodiment, the window cleaning machine 10 comprises a casing 15 having therein a receiving space for receiving the bump structures 17, body 11, walking module 12, air extracting module 13, and air pressure sensors. In an embodiment, the window cleaning machine 10 comprises a spraying module 19 embedded in the casing 15, attached to the casing 15 by suction, or adhered to the casing 15. The spraying module 19 sprays clean water or a cleaning liquid, such as a detergent.

In an embodiment, the carrying board 120 is disposed between the first cleaning device 81 and the bottom board 130 and disposed between the second cleaning device 82 and the bottom board 130. The carrying board 120 has a first surface 20A (i.e., the upper surface of the carrying board 120) and an opposing second surface 20B (i.e., the lower surface of the carrying board 120). A seal-oriented structure is disposed on the first surface 20A of the carrying board 120 and adapted to form the sidewall of the primary suction space 550. In an embodiment, a carrying board wall portion 121 is disposed on the first surface 20A of the carrying board 120, protrudes from the first surface 20A and encloses the primary suction space 550 (a carrying board through hole 550b). Preferably, the interior of a central portion defined by the carrying board wall portion 121 and positioned proximate to the carrying board 120 functions as a portion of the primary suction space 550. In an embodiment, regarding its appearance, the carrying board 120 has an H-shaped structure such that the walk component 12a and the walk component 12b are disposed within the space defined by the H-shaped structure of the carrying board 120. In an embodiment, the carrying board wall portion 121 does not protrude from the first surface 20A.

In an embodiment illustrated by FIG. 1, the bottom board 130 disposed above the carrying board 120 has a bottom board wall portion 131 enclosing the primary suction space 550 (a first bottom board through hole 550a). The bottom board wall portion 131 is disposed near a central portion of the bottom board 130. The bottom board wall portion 131 and the carrying board wall portion 121 are attached to each other to form an airtight structure, and the bottom board wall portion 131 can still move relative to the carrying board wall portion 121. For instance, the bottom board wall portion 131 protrudes in the direction away from the carrying board 120, whereas a groove 132 (shown in FIG. 2) is disposed on the bottom board 130 and faces the carrying board 120, allowing the carrying board wall portion 121 to be inserted into the groove 132. The carrying board through hole 550b and the first bottom board through hole 550a form the primary suction space 550. In an embodiment, the region defined by the carrying board wall portion 121 serves as the carrying board through hole 550b before being hermetically sealed but serves as the primary suction space 550 or at least a portion thereof after being hermetically sealed.

In an embodiment, the first surface 20A comprises multiple sensing space wall portions 122 protruding from the first surface 20A. The sensing space wall portions 122 are disposed near the edges of the carrying board 120 respectively, and their interiors function as spaces for sensing a gas pressure leak. The window cleaning machine 10 further comprises multiple air pressure sensors 14. After the sensing space wall portions 122 have penetrated a second bottom board through hole 133 (shown in FIG. 2) of the bottom board 130, the air pressure sensors 14 are fixed to the sensing space wall portions 122 to restrain the vertical movement of the bottom board 130 and the carrying board 120 coupled together. Thus, a certain degree of variation in the thickness of the window cleaning machine 10 in the vertical direction can be maintained without causing the separation of the bottom board 130 and the carrying board 120. As shown in FIG. 1, the bottom board 130 has the first bottom board through hole 550a and multiple second bottom board through holes 133 (as shown in FIG. 2). In an embodiment, the first bottom board through hole 550a is defined by the bottom board wall portion 131, for example, the bottom board wall portion 131 encloses the first bottom board through hole 550a. The second bottom board through holes 133 are formed on the bottom board 130. In an embodiment, the second bottom board through holes 133 are disposed near the edges of the bottom board 130 and aligned with the sensing space wall portions 122 of the carrying board 120 below the bottom board 130 in the vertical direction. In an embodiment, the inner rims of the second bottom board through holes 133 correspond in shape to the outer rims of the sensing space wall portions 122, for example, the areas enclosed by the inner rims of the second bottom board through holes 133 are slightly greater than the areas enclosed by the outer rims of the sensing space wall portions 122 to allow the sensing space wall portions 122 to penetrate the second bottom board through holes 133, allowing the carrying board 120 and the bottom board 130 to move vertically along the sensing space wall portions 122 through the sensing space wall portions 122 penetratingly disposed at the second bottom board through holes 133 respectively.

In another variant embodiment, the body 11 further comprises at least one pivot shaft (not shown) for restraining the vertical movement of the bottom board 130 and the carrying board 120 coupled together such that a certain degree of variation in the thickness of the window cleaning machine 10 in the vertical direction can be maintained without causing the separation of the bottom board 130 and the carrying board 120. For instance, the pivot shaft is disposed near a corner of the carrying board 120 and fixed to a suction cup and thus extended in the direction of the bottom board 130. The bottom board 130 is movably connected to the carrying board 120 through the pivot shaft. The volume of the primary suction space 550 increases or decreases in response to the aforesaid increase or decrease in the thickness of the window cleaning machine 10. In an embodiment, the bottom board 130 has multiple penetrating holes which the pivot shaft penetrates. The length of the pivot shaft is greater than the length of the penetrating holes corresponding in position to the pivot shaft to not only allow the carrying board 120 to be pivotally connected to the bottom board 130 through the pivot shaft but also allow the carrying board 120 to move in the axial direction of the pivot shaft. Thus, the carrying board 120 not only moves relative to the bottom board 130 through the pivot shaft but is also driven by the bottom board 130. Preferably, the axis of the pivot shaft is substantially parallel to the normal to the bottom surface of the carrying board 120, and thus the carrying board 120 can move in the direction of the normal.

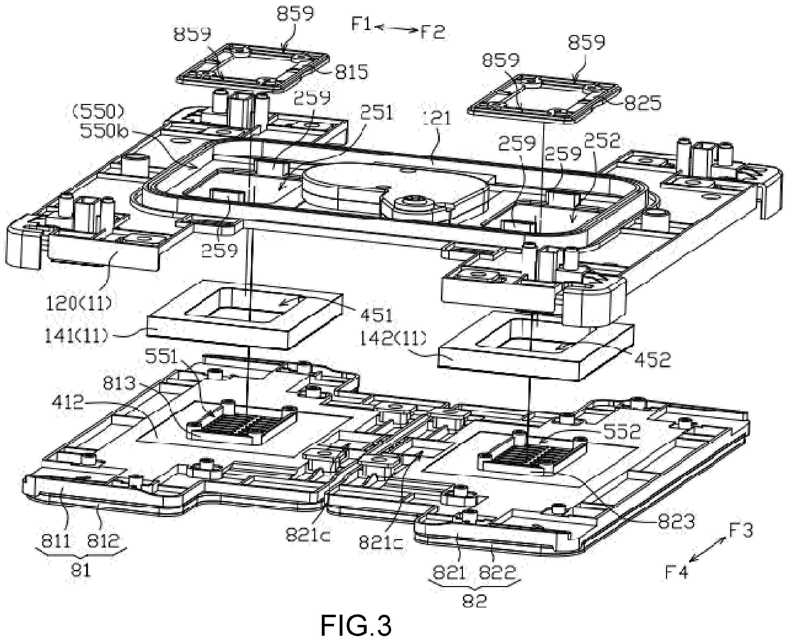

FIG. 3 is an exploded view of the window cleaning machine in an embodiment of the disclosure, showing the carrying board, first cleaning device, and second cleaning device. In an embodiment illustrated by FIG. 3, the carrying board 120 defines a first penetrating hole 251 and a second penetrating hole 252 which penetrate the carrying board 120. Preferably, the first penetrating hole 251 and the second penetrating hole 252 are disposed within the region defined by the carrying board wall portion 121 or disposed in the primary suction space 550.

The first cleaning device 81 comprises a first suction cup 811 and a first cleaning fabric 812. The first suction cup 811 defines the first subsidiary space 551 and is connected to the driving device 16. The first cleaning fabric 812 is disposed at the first suction cup 811. Specifically speaking, the first cleaning fabric 812 is disposed on the lower surface of the first suction cup 811. A first suction cup wall portion 813 is disposed on the upper surface of the first suction cup 811 and protrudes toward the carrying board 120. Preferably, the first suction cup wall portion 813 protrudes from the first penetrating hole 251 of the carrying board 120 and thus defines the first subsidiary space 551. In an embodiment, the first suction cup wall portion 813 is inserted into the first penetrating hole 251 and undergoes a reciprocating motion within the first penetrating hole 251. In an embodiment, the first suction cup 811 comprises multiple suction cup openings penetrating the first suction cup 811 and distributed within the region enclosed by the first suction cup wall portion 813. From the perspective of their appearance, the suction cup openings are arcuate openings, round openings, slit openings, slender openings or elliptical openings (see the suction cup openings shown in FIG. 3).

The second cleaning device 82 comprises a second suction cup 821 and a second cleaning fabric 822. The second suction cup 821 defines the second subsidiary space 552 and is connected to the driving device 16. The second cleaning fabric 822 is disposed at the second suction cup 821. Specifically speaking, the second cleaning fabric 822 is disposed on the lower surface of the second suction cup 821. A second suction cup wall portion 823 is disposed on the upper surface of the second suction cup 821 and protrudes toward the carrying board 120. Preferably, the second suction cup wall portion 823 protrudes toward the second penetrating hole 252 of the carrying board 120 and thus defines the second subsidiary space 552. In an embodiment, the second suction cup wall portion 823 is inserted into the second penetrating hole 252 and undergoes a reciprocating motion within the second penetrating hole 252. In an embodiment, the second suction cup 821 comprises multiple suction cup openings penetrating the second suction cup 821 and distributed in the scope defined by the second suction cup wall portion 823. From the perspective of their appearance, the suction cup openings are arcuate openings, round openings, slit openings, slender openings or elliptical openings (see the suction cup openings shown in FIG. 3).

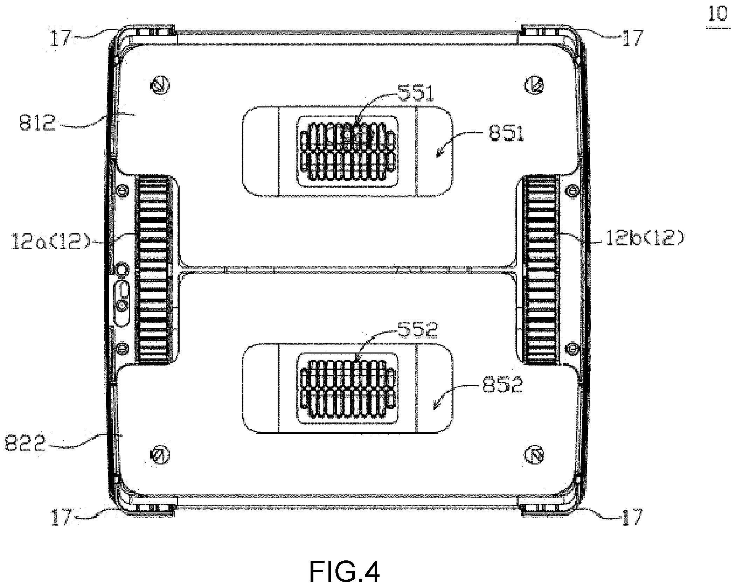

FIG. 4 is a bottom view of the window cleaning machine in an embodiment of the disclosure. In an embodiment illustrated by FIG. 4, the first cleaning fabric 812 and the second cleaning fabric 822 are adhered to the lower surfaces of the first cleaning device 81 and the second cleaning device 82 respectively and are in contact with the pane surface 40A. In an embodiment, the first cleaning fabric 812 and the second cleaning fabric 822 define a first fabric opening 851 and a second fabric opening 852 respectively for exposing the first subsidiary space 551 and the second subsidiary space 552 respectively. In an embodiment, the external surfaces of the cleaning fabrics are enhanced with cleaning-oriented wool fibers, and the cleaning fabrics have therein resilient plastic pieces that function as its inner lining structure. Therefore, in addition to the first fabric opening 851 and the second fabric opening 852, the cleaning fabrics are capable of precluding the passage of air to serve a blockage purpose. In an embodiment, the first cleaning fabric 812 and the second cleaning fabric 822 cover the first subsidiary space 551 and the second subsidiary space 552 (not shown) respectively, and both the first cleaning fabric 812 and the second cleaning fabric 822 are made of a gas-permeable material.

In an embodiment, the body 11 defines a primary suction space 550. The air extracting module 13 is disposed on the body 11 and is in communication with the primary suction space 550. The first cleaning device 81 is in contact with the pane surface 40A while performing a cleaning operation. The second cleaning device 82 is in contact with the pane surface 40A while performing a cleaning operation. The driving device 16 is connected to the first cleaning device 81 and the second cleaning device 82 to cause the first cleaning device 81 and the second cleaning device 82 to undergo a reciprocating motion and thus wipe the pane surface 40A back and forth. The first cleaning device 81 defines the first subsidiary space 551, allowing the first subsidiary space 551 to come into communication with the primary suction space 550 and the primary suction space 550 to form an airtight space when the first cleaning device 81 comes into contact with the pane surface 40A. The second cleaning device 82 defines the second subsidiary space 552, allowing the second subsidiary space 552 to come into communication with the primary suction space 550 and the primary suction space 550 to form an airtight space when the second cleaning device 82 comes into contact with the pane surface 40A.

In an embodiment, the walking module 12 is disposed outside the first subsidiary space 551 and the second subsidiary space 552. Specifically speaking, the walking module 12 is disposed outside the first cleaning device 81 and the second cleaning device 82, and the walking module 12 is not in contact with the first cleaning device 81 and the second cleaning device 82 while the first cleaning device 81 and the second cleaning device 82 are undergoing a reciprocating motion relative to the carrying board 120. In an embodiment, the first subsidiary space 551 and the second subsidiary space 552, which are in communication with the primary suction space 550, undergo a reciprocating motion in response to the reciprocating motion of the first cleaning device 81 and the second cleaning device 82 and maintain the state of the primary suction space 550 being an airtight space. In this embodiment, the first cleaning device 81 and the second cleaning device 82 undergo a reciprocating motion across the pane surface 40A and thus are able to wipe the pane 40 efficiently. Owing to the reciprocating motion of the first cleaning device 81 and the second cleaning device 82, dynamic friction is generated between the first cleaning device 81 and the pane 40 as well as between the second cleaning device 82 and the pane 40. With dynamic friction being weaker than static friction, the window cleaning machine 10 moving across the pane 40 experiences less friction than conventional motionless cleaning devices and thereby can move against the gravity to climb across the pane 40 smoothly. In an embodiment, the window cleaning machine 10 does not include or dispenses with any static cleaning device not moving relative to the body 11 while being in contact with the pane surface 40A being cleaned during the cleaning process. Static friction is generated between a static cleaning device and the pane 40; thus, the window cleaning machine 10 experiences great walking resistance to the detriment of its walking across the vertical pane surface 40A. In another embodiment, the window cleaning machine 10 does not include or dispenses with any static cleaning device and thus further reduces the generation of static friction to therefore move against the gravity to climb across the pane 40 smoothly.

In an embodiment, the driving device 16 causes the first cleaning device 81 to undergo a reciprocating motion in a first direction and causes the second cleaning device 82 to undergo a reciprocating motion in a second direction opposite to the first direction. The first cleaning device 81 and the second cleaning device 82 move in opposite directions at the same point in time, and thus their reaction forces offset each other, allowing the window cleaning machine 10 to walk across the pane surface 40A steadily.

In an embodiment, the body 11 further comprises a first resilient member 141 and a second resilient member 142. The first resilient member 141 is disposed between the first suction cup 811 of the first cleaning device 81 and the carrying board 120. The first resilient member 141 defines a first through hole 451, and the first suction cup wall portion 813 is inserted into the first through hole 451. In an embodiment, when attached to the carrying board 120, the first cleaning device 81 partially compresses the first resilient member 141 to reduce external air passing between the first cleaning device 81 and the carrying board 120 and entering the first subsidiary space 551 and the primary suction space 550.

The second resilient member 142 is disposed between the second suction cup 821 of the second cleaning device 82 and the carrying board 120. The second resilient member 142 defines a second through hole 452, and the second suction cup wall portion 823 is disposed in the second through hole 452. In an embodiment, when attached to the carrying board 120, the second cleaning device 82 partially compresses the second resilient member 142 to reduce external air passing between the second cleaning device 82 and the carrying board 120 and entering the second subsidiary space 552 and the primary suction space 550. In an embodiment, the first resilient member 141 and the second resilient member 142 are made of foam.

As mentioned above, according to the disclosure, with the air extracting module 13 in operation, the air in the vicinity of the pane surface 40A is extracted from the pane surface 40A via the first cleaning device 81, second cleaning device 82, carrying board 120 and the bottom board 130 and then drawn out of the air extracting module 13. Given the aforesaid structure, part of the air flowing along the path of the flow of air within the window cleaning machine 10 actually passes through the first and second subsidiary spaces 551, 552 defined by the first and second cleaning devices 81, 82, then enters a carrying board opening that penetrates the carrying board 120, next enters the space (for example, the carrying board through hole 550b) enclosed by the carrying board wall portion 121, then enters the space (for example, the first bottom board through hole 550a) defined by the bottom board wall portion 131 via a bottom board opening that penetrates the bottom board 130, and is finally drawn out of the air extracting module 13 disposed above the bottom board 130. Thus, in an embodiment of the disclosure, the primary suction space 550 defined by the body 11 substantially comprises the space defined and enclosed by the pane 40, the carrying board wall portion 121 and the bottom board wall portion 131, and its end is covered with the air extracting module 13. The primary suction space 550 is hermetically sealed by the pane 40 through the first and second subsidiary spaces 551, 552 defined by the first and second cleaning devices 81, 82. In an embodiment illustrated by FIG. 8, the pane surface 40A can hermetically seal one end of the primary suction space 550, and the primary suction space 550 has a negative pressure because of the air extraction performed by the air extracting module 13 covering the other end of the primary suction space 550, allowing the window cleaning machine 10 to move across the pane 40 not lying horizontally without falling off.

In an embodiment illustrated by FIG. 1, the bump structures 17 are configured to move relative to each other on the body 11 or the carrying board 120 in a movement direction (F1 or F2) of the window cleaning machine 10. The walk component 12b and walk component 12a are tracked pulleys whose long axes extend in the movement direction (F1 or F2), and the bump structures 17 are configured to move relative to each other along the long axes of the walk component 12b and walk component 12a. In an embodiment, the window cleaning machine 10 further precludes air leakage which might otherwise occur when suction cups bend upward upon a collision between the window cleaning machine 10 and the edge of a windowpane being wiped by the window cleaning machine 10 - a drawback of conventional window cleaner robots.

### [Second Embodiment]

As shown in FIG. 1 and FIG. 3, the window cleaning machine 10 provided according to the second embodiment of the disclosure comprises a trilayer structure comprising the first cleaning device 81, bottom board 130 and carrying board 120. The carrying board 120 is configured to undergo axial movement relative to the bottom board 130. The first cleaning device 81 is configured to undergo a planar reciprocating motion relative to the carrying board 120. Thus, the trilayer structure enables the first cleaning device 81 to not only undergo axial movement (move vertically, up and down movement) in an axial direction D but also undergo a planar reciprocating motion (move horizontally, left and right movement) in a first direction F1 and a second direction F2, i.e., directions extending away from the two ends of the two-way direction F.

In this embodiment, the window cleaning machine 10 is adapted to walk across a non-horizontal pane surface 40A. The window cleaning machine 10 is a self-moving cleaner that comprises the body 11, walking module 12, air extracting module 13, first cleaning device 81 and driving device 16. The body 11 defines a primary suction space 550. The walking module 12 is disposed near the body 11. The air extracting module 13 is disposed on the body 11 and is in communication with the primary suction space 550, allowing the body 11 to cling to the pane surface 40A by suction. The first cleaning device 81 is in contact with the pane surface 40A while performing a cleaning operation. The driving device 16 is connected to the first cleaning device 81 to cause the first cleaning device 81 to undergo a reciprocating motion and thus wipe the pane surface 40A back and forth. The body 11 further comprises the bottom board 130 and the carrying board 120. The bottom board 130 comprises the bottom board wall portion 131 enclosing the first bottom board through hole 550a. The carrying board 120 is disposed between the first cleaning device 81 and the bottom board 130. The carrying board 120 and the bottom board 130 are connected and jointly define the primary suction space 550. The carrying board 120 is configured to undergo axial movement relative to the bottom board 130. The first cleaning device 81 is configured to undergo a planar reciprocating motion relative to the carrying board 120 (vertical motion and lateral motion).

In an embodiment, the first cleaning device 81 defines the first subsidiary space 551, and the first subsidiary space 551 is in communication with the primary suction space 550. The first subsidiary space 551 in communication with the primary suction space 550 undergoes a reciprocating motion in response to the reciprocating motion of the first cleaning device 81. The first cleaning device 81 is in contact with the pane surface 40A to maintain the state of the primary suction space 550 being an airtight space.

In an embodiment, the carrying board 120 comprises the carrying board wall portion 121 enclosing the carrying board through hole 550b and attached to the bottom board wall portion 131. The bottom board wall portion 131 can move relative to the carrying board wall portion 121. The carrying board through hole 550b and the first bottom board through hole 550a form the primary suction space 550.

In an embodiment, the window cleaning machine 10 further comprises the second cleaning device 82. The carrying board 120 is disposed between the second cleaning device 82 and the bottom board 130. The second cleaning device 82 is in contact with the pane surface 40A while performing a cleaning operation. The driving device 16 is connected to the second cleaning device 82 to cause the second cleaning device 82 to undergo a reciprocating motion and thus wipe the pane surface 40A back and forth. The second cleaning device 82 is configured to undergo a reciprocating motion relative to the carrying board 120. The second cleaning device 82 defines the second subsidiary space 552, and the second subsidiary space 552 is in communication with the primary suction space 550. The second subsidiary space 552 in communication with the primary suction space 550 undergoes a reciprocating motion in response to the reciprocating motion of the second cleaning device 82. The second cleaning device 82 is in contact with the pane surface 40A to maintain the state of the primary suction space 550 being an airtight space.

In an embodiment, the driving device 16 causes the first cleaning device 81 to undergo a reciprocating motion in a first direction and causes the second cleaning device 82 to undergo a reciprocating motion in a second direction opposite to the first direction.

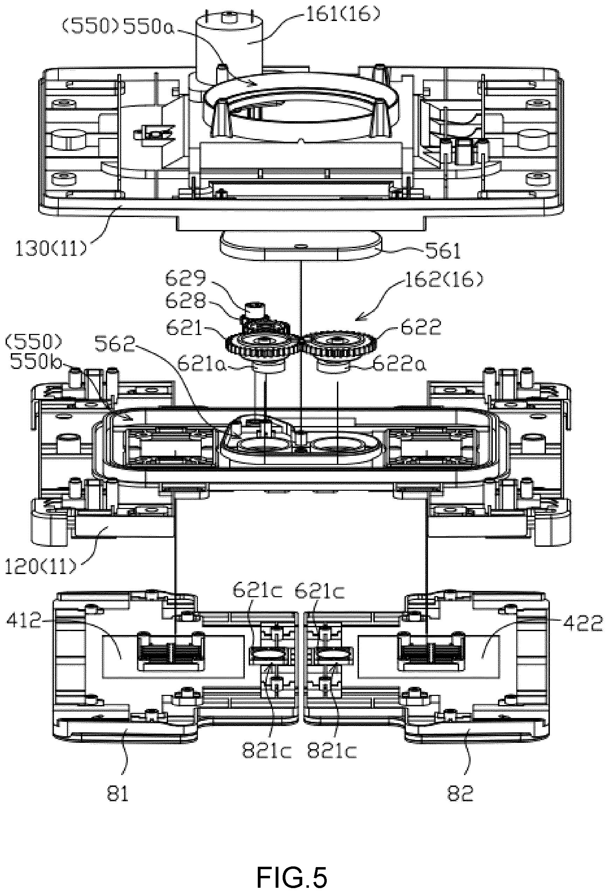

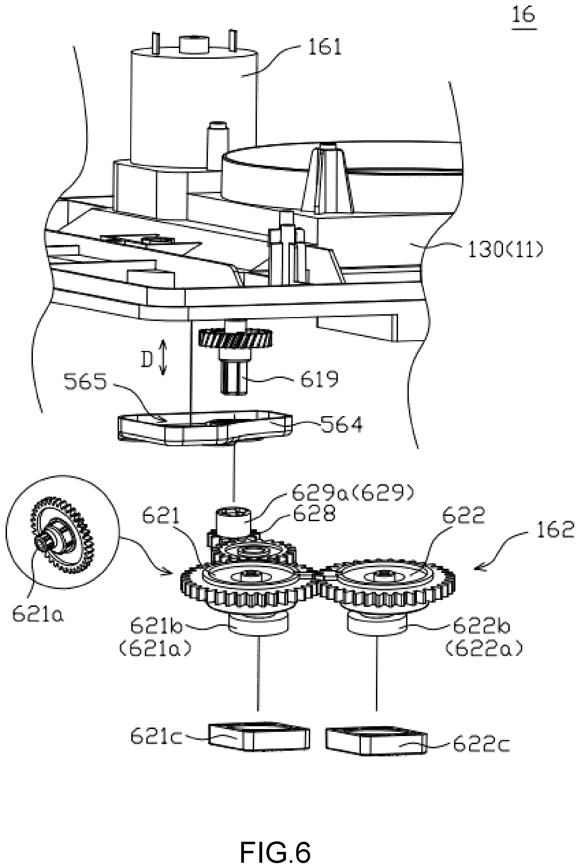

FIG. 5 is an exploded view of the window cleaning machine in an embodiment of the disclosure, showing the bottom board, carrying board, first cleaning device and second cleaning device. FIG. 6 is an exploded view of a driving device 16 in an embodiment of the disclosure.

In an embodiment illustrated by FIG. 5 and FIG. 6, the driving device 16 comprises an motor 161 and a gear module 162. The motor 161 is disposed at the bottom board 130 and comprises a rotating shaft 619. The motor 161 is disposed at the bottom board 130 such that the weight of the carrying board 120 is reduced, allowing the carrying board 120 to undergo axial movement relative to the bottom board 130. The gear module 162 is disposed on the carrying board 120 and comprises a connection portion 629. The rotating shaft 619 of the motor 161 is relatively movably connected to the connection portion 629 of the gear module 162. The gear module 162 is connected to the first cleaning device 81 and the second cleaning device 82 to cause the first cleaning device 81 and the second cleaning device 82 to undergo a reciprocating motion relative to the carrying board 120 through the motor 161 and the gear module 162.

In an embodiment illustrated by FIG. 6, the connection portion 629 comprises a meshing teeth portion 628. The gear module 162 further comprises a first gear 621 and a second gear 622. The first gear 621 is connected to the meshing teeth portion 628 of the connection portion 629. The second gear 622 is connected to the first gear 621. The connection portion 629 of the motor 161 drives the first gear 621 rotating in a first rotation direction. The first gear 621 drives the second gear 622 rotating in a second rotation direction opposite to the first rotation direction. The first gear 621 has a first eccentric shaft 621a, and the first eccentric shaft 621a is connected to the first cleaning device 81. The second gear 622 has a second eccentric shaft 622a, and the second eccentric shaft 622a is connected to the second cleaning device 82. The first eccentric shaft 621a has a bearing 621b. The second eccentric shaft 622a has a bearing 622b.

In an embodiment illustrated by FIG. 3, the carrying board 120 defines the first penetrating hole 251 and the second penetrating hole 252. The first cleaning device 81 comprises the first suction cup wall portion 813 enclosing the first subsidiary space 551. The first suction cup wall portion 813 is configured to be inserted into the first penetrating hole 251 and undergo a reciprocating motion within the first penetrating hole 251. The second cleaning device 82 comprises the second suction cup wall portion 823 enclosing the second subsidiary space 552. The second suction cup wall portion 823 is configured to be inserted into the second penetrating hole 252 and undergo a reciprocating motion within the second penetrating hole 252.

In an embodiment, the body 11 further comprises the first resilient member 141 and the second resilient member 142. The first resilient member 141 is disposed between the first cleaning device 81 and the carrying board 120. The first resilient member 141 defines a first through hole 451. The first suction cup wall portion 813 is disposed in the first through hole 451. The second resilient member 142 is disposed between the second cleaning device 82 and the carrying board 120. The second resilient member 142 defines a second through hole 452. The second suction cup wall portion 823 is disposed in the second through hole 452.

In an embodiment, when attached to the carrying board 120, the first cleaning device 81 partially compresses the first resilient member 141 to reduce external air passing between the first cleaning device 81 and the carrying board 120 and entering the primary suction space 550. When attached to the carrying board 120, the second cleaning device 82 partially compresses the second resilient member 142 to reduce external air passing between the second cleaning device 82 and the carrying board 120 and entering the primary suction space 550.

In an embodiment illustrated by FIG. 3 and FIG. 4, the first cleaning device 81 comprises a first suction cup 811 and a first cleaning fabric 812. The first suction cup 811 defines the first subsidiary space 551 and is connected to the driving device 16. The first cleaning fabric 812 is disposed at the first suction cup 811 and adapted to expose the first subsidiary space 551. The second cleaning device 82 comprises a second suction cup 821 and a second cleaning fabric 822. The second suction cup 821 defines the second subsidiary space 552 and is connected to the driving device 16. The second cleaning fabric 822 is disposed at the second suction cup 821 and adapted to expose the second subsidiary space 552.

In an embodiment, the first cleaning fabric 812 and the second cleaning fabric 822 expose the first subsidiary space 551 and the second subsidiary space 552 respectively. In an embodiment, the first cleaning fabric 812 and the second cleaning fabric 822 cover the first subsidiary space 551 and the second subsidiary space 552 respectively, and both the first cleaning fabric 812 and the second cleaning fabric 822 are made of a gas-permeable material.

### [Third Embodiment]

The window cleaning machine 10 provided according to an embodiment of the disclosure comprises a first resilient member 141. The first resilient member 141 is disposed between the body 11 and the first cleaning device 81 to reduce external air passing between the body 11 and the first cleaning device 81 and entering the primary suction space 550 of the body 11.

In this embodiment, the window cleaning machine 10 is adapted to walk across a non-horizontal pane surface 40A. The window cleaning machine 10 comprises the body 11, walking module 12, air extracting module 13, first cleaning device 81 and driving device 16. The body 11 defines the primary suction space 550. The walking module 12 is disposed near the body 11. The air extracting module 13 is disposed on the body 11 and is in communication with the primary suction space 550. The first cleaning device 81 is in contact with the pane surface 40A while performing a cleaning operation. The driving device 16 is connected to the first cleaning device 81 to cause the first cleaning device 81 to undergo a reciprocating motion and thus wipe the pane surface 40A back and forth. The first cleaning device 81 defines a first subsidiary space 551, allowing the first subsidiary space 551 to come into communication with the primary suction space 550 and the primary suction space 550 to form an airtight space when the first cleaning device 81 comes into contact with the pane surface 40A. The first cleaning device 81 comprises the first suction cup wall portion 813 enclosing the first subsidiary space 551. The window cleaning machine 10 further comprises the first resilient member 141. The first resilient member 141 defines a first through hole 451, and the first suction cup wall portion 813 is disposed in the first through hole 451.

In an embodiment, the first resilient member 141 is in contact with the first cleaning device 81, and at least one smooth layer is disposed between the first resilient member 141 and the first cleaning device 81.

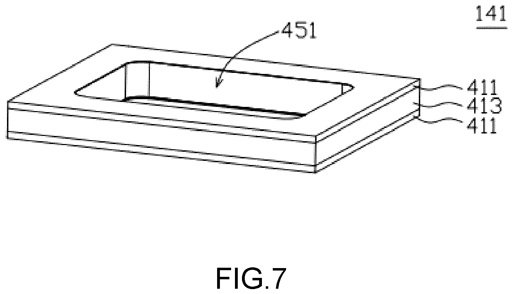

FIG. 7 is a perspective view of a first resilient member 141 in an embodiment of the disclosure. In an embodiment illustrated by FIG. 7, the at least one smooth layer comprises a first smooth layer 411, and the first resilient member 141 comprises the first smooth layer 411 and a resilient layer 413, with the first smooth layer 411 adhered to a surface of the resilient layer 413. Preferably, the first resilient member 141 comprises another first smooth layer 411 adhered to the other surface of the resilient layer 413. In an embodiment illustrated by FIG. 3 or FIG. 5, the at least one smooth layer comprises a second smooth layer 412. The first cleaning device 81 has an upper surface which the second smooth layer 412 is disposed on. The first smooth layer 411 is in contact with the second smooth layer 412 and moves relative to the second smooth layer 412. Preferably, the carrying board 120 comprises another second smooth layer 412 adhered to the lower surface (not shown) of the carrying board 120. The smooth layers have a lower surface friction coefficient than at least one of the resilient layer 413, the upper surface of the first cleaning device 81 (the first suction cup 811), and the lower surface of the carrying board 120.

In an embodiment, the first cleaning device 81 compresses the first resilient member 141 to reduce external air passing between the first cleaning device 81 and the body 11 and entering the primary suction space 550 while the first cleaning device 81 is undergoing a reciprocating motion relative to the body 11.

In an embodiment, the body 11 further comprises a carrying board 120. The carrying board 120 defines a first penetrating hole 251. The first suction cup wall portion 813 is configured to be inserted into the first penetrating hole 251 and undergo a reciprocating motion within the first penetrating hole 251. The first resilient member 141 is disposed between the first cleaning device 81 and the carrying board 120. The first cleaning device 81 is configured to undergo a reciprocating motion relative to the carrying board 120.

In an embodiment illustrated by FIG. 3, the body 11 further comprises a first suction cup cover 815 and a second suction cup cover 825. The first suction cup cover 815 and the second suction cup cover 825 are disposed on a first side (upper surface) of the carrying board 120. The first cleaning device 81 and the second cleaning device 82 are disposed on a second side (lower surface) of the carrying board 120. The first suction cup cover 815 and the second suction cup cover 825 are fixed to the first suction cup wall portion 813 and the second suction cup wall portion 823, allowing the first cleaning device 81 and the second cleaning device 82 to be attached to the carrying board 120.

In an embodiment, when attached to the carrying board 120, the first cleaning device 81 compresses the first resilient member 141 to reduce external air passing between the first cleaning device 81 and the carrying board 120 and entering the primary suction space 550 while the first cleaning device 81 is undergoing a reciprocating motion relative to the carrying board 120.

In an embodiment, the window cleaning machine 10 further comprises a second cleaning device 82. The second cleaning device 82 is in contact with the pane surface 40A while performing a cleaning operation. The driving device 16 is connected to the second cleaning device 82 to cause the second cleaning device 82 to undergo a reciprocating motion and thus wipe the pane surface 40A back and forth. The second cleaning device 82 defines the second subsidiary space 552, allowing the second subsidiary space 552 to come into communication with the primary suction space 550 and the primary suction space 550 to form an airtight space when the second cleaning device 82 comes into contact with the pane surface 40A.

In an embodiment, the driving device 16 causes the first cleaning device 81 to undergo a reciprocating motion in a first direction and causes the second cleaning device 82 to undergo a reciprocating motion in a second direction opposite to the first direction.

In an embodiment, the carrying board 120 further defines a second penetrating hole 252. The second cleaning device 82 comprises the second suction cup wall portion 823 enclosing the second subsidiary space 552. The second suction cup wall portion 823 is configured to be inserted into the second penetrating hole 252 and undergo a reciprocating motion within the second penetrating hole 252. The window cleaning machine 10 further comprises a second resilient member 142. The second resilient member 142 is disposed between the second cleaning device 82 and the carrying board 120. The second resilient member 142 defines a second through hole 452, and the second suction cup wall portion 823 is disposed in the second through hole 452. The body 11 further comprises a second suction cup cover 825. The second suction cup cover 825 is disposed on the first side of the carrying board 120. The second cleaning device 82 is disposed on the second side of the carrying board 120. The second suction cup cover 825 is fixed to the second suction cup wall portion 823, allowing the second cleaning device 82 to be attached to the carrying board 120. When attached to the carrying board 120, the second cleaning device 82 compresses the second resilient member 142 to reduce external air passing between the second cleaning device 82 and the carrying board 120 and entering the primary suction space 550 while the second cleaning device 82 is undergoing a reciprocating motion relative to the carrying board 120.

In an embodiment, the first cleaning device 81 comprises a first suction cup 811 and a first cleaning fabric 812. The first suction cup 811 defines the first subsidiary space 551 and is connected to the driving device 16. The first cleaning fabric 812 is disposed at the first suction cup 811. The second cleaning device 82 comprises a second suction cup 821 and a second cleaning fabric 822. The second suction cup 821 defines the second subsidiary space 552 and is connected to the driving device 16. The second cleaning fabric 822 is disposed at the second suction cup 821.

In an embodiment illustrated by FIG. 1, the body 11 further comprises a bottom board 130. The bottom board 130 is disposed near an upper portion of the body 11. The bottom board 130 comprises the bottom board wall portion 131 enclosing the first bottom board through hole 550a. The carrying board 120 is disposed between the first cleaning device 81 and the bottom board 130 and disposed between the second cleaning device 82 and the bottom board 130. The carrying board 120 is connected to the bottom board 130. The first suction cup 811 comprises the first suction cup wall portion 813 enclosing the first subsidiary space 551 and protruding toward the upper surface of the first suction cup 811. The first suction cup wall portion 813 is inserted into the first penetrating hole 251 and undergoes a reciprocating motion within the first penetrating hole 251. The first subsidiary space 551 is in communication with the carrying board through hole 550b. The second suction cup 821 comprises the second suction cup wall portion 823 enclosing the second subsidiary space 552 and protruding toward the upper surface of the second suction cup 821. The second suction cup wall portion 823 is inserted into the second penetrating hole 252 and undergoes a reciprocating motion within the second penetrating hole 252. The second subsidiary space 552 is in communication with the carrying board through hole 550b.

In an embodiment, the first cleaning fabric 812 and the second cleaning fabric 822 expose the first subsidiary space 551 and the second subsidiary space 552 respectively, or the first cleaning fabric 812 and the second cleaning fabric 822 cover the first subsidiary space 551 and the second subsidiary space 552 respectively, and both the first cleaning fabric 812 and second cleaning fabric 822 are made of a gas-permeable material.

### [Fourth Embodiment]

The window cleaning machine 10 provided according to an embodiment of the disclosure comprises a driving device 16 comprising an motor 161 and a gear module 162. Thus, the body 11 of the window cleaning machine 10 is thin, and preferably the window cleaning machine 10 is light.

In an embodiment, the window cleaning machine 10 is adapted to walk across a non-horizontal pane surface 40A. The window cleaning machine 10 comprises the body 11, air extracting module 13, first cleaning device 81, second cleaning device 82, walking module 12, and driving device 16. The body 11 defines a primary suction space 550. The air extracting module 13 is disposed on the body 11 and is in communication with the primary suction space 550. The first cleaning device 81 is in contact with the pane surface 40A while performing a cleaning operation. The second cleaning device 82 is in contact with the pane surface 40A while performing a cleaning operation. The walking module 12 is disposed near the body 11. The driving device 16 is connected to the first cleaning device 81 and the second cleaning device 82 to cause the first cleaning device 81 to undergo a reciprocating motion in a first direction and cause the second cleaning device 82 to undergo a reciprocating motion in a second direction opposite to the first direction so as to wipe the pane surface 40A back and forth. The driving device 16 comprises the motor 161 and the gear module 162 connected to the motor 161. The gear module 162 comprises a first gear 621 and a second gear 622. The first gear 621 has a first eccentric shaft 621a, and the first eccentric shaft 621a is connected to the first cleaning device 81. The second gear 622 is directly or indirectly connected to the first gear 621 and has a second eccentric shaft 622a. The second eccentric shaft 622a is connected to the second cleaning device 82. The motor 161 drives the first gear 621 rotating in a first rotation direction. The first gear 621 drives the second gear 622 rotating in a second rotation direction opposite to the first rotation direction.

In an embodiment illustrated by FIG. 1, FIG. 2 and FIG. 5, the gear module 162 is disposed in the primary suction space 550. Preferably, the body 11 further comprises the carrying board 120, and the carrying board 120 has a first surface and a second surface opposing the first surface. The gear module 162 is disposed on the first surface of the carrying board 120. The first cleaning device 81 and the second cleaning device 82 face the second surface of the carrying board 120. The first cleaning device 81 and the second cleaning device 82 are configured to undergo a reciprocating motion relative to the carrying board 120. In an embodiment, the first gear 621 and the second gear 622 are flat. Preferably, the first gear 621 and the second gear 622 are flat and round. This design can reduce the generation of forces perpendicular to the pane surface 40A generated from the first gear 621 and the second gear 622 during the rotation of the first gear 621 and the second gear 622 in the flat circular shape. Or, ideally, the first gear 621 and the second gear 622 do not generate a force perpendicular to the plate surface 40A.

In an embodiment illustrated by FIG. 5 and FIG. 6, the body 11 further comprises a gear cover 561. The gear cover 561 and the carrying board 120 define a receiving space 562 for receiving the first gear 621 and the second gear 622. Gaps exist between the gears of the gear module 162, and thus external air is likely to enter the primary suction space 550, leading to an air leak. In this embodiment, covering the receiving space 562 with the gear cover 561 is conducive to the reduction or even prevention of the air leakage associated with the gear module or air leakage associated with the cleaning devices. The gear cover 561 not only ensures the airtightness of the primary suction space 550 but also enables the receiving space 562 to be separated from the primary suction space 550. In an embodiment, the gear cover 561 exposes the connection portion 629, allowing the connection portion 629 to be connected to the rotating shaft 619. In an embodiment, the connection portion 629 has a hollow core, and thus the rotating shaft 619 can be embedded into the connection portion 629.

In an embodiment, the window cleaning machine 10 is adapted to walk across a non-horizontal pane surface 40A. The window cleaning machine 10 comprises the body 11, air extracting module 13, first cleaning device 81, second cleaning device 82, walking module 12, and driving device 16. The body 11 defines a primary suction space 550. The air extracting module 13 is disposed on the body 11 and is in communication with the primary suction space 550. The first cleaning device 81 is in contact with the pane surface 40A while performing a cleaning operation. The second cleaning device 82 is in contact with the pane surface 40A while performing a cleaning operation. The walking module 12 is disposed near the body 11. The driving device 16 is connected to the first cleaning device 81 and the second cleaning device 82 to cause the first cleaning device 81 to undergo a reciprocating motion in a first direction and cause the second cleaning device 82 to undergo a reciprocating motion in a second direction opposite to the first direction so as to wipe the pane surface 40A back and forth. The driving device 16 comprises the motor 161 and the gear module 162. The motor 161 comprises a rotating shaft 619. The gear module 162 comprises a connection portion 629. The rotating shaft 619 of the motor 161 is axially, relatively movably connected to the connection portion 629 of the gear module 162, allowing the motor 161 and the gear module 162 to move relative to each other. The gear module 162 is connected to the first cleaning device 81 and the second cleaning device 82, allowing the first cleaning device 81 and the second cleaning device 82 to undergo a planar reciprocating motion relative to the body 11 through the motor 161 and the gear module 162.

In an embodiment illustrated by FIG. 6, the body 11 further comprises an motor cover 564. The motor cover 564 and the bottom board 130 define a receiving space 565 for receiving a portion of the motor 161, for example, a gear. In this embodiment, the motor cover 564 covers a portion of the motor 161, for example, a gear, to reduce or prevent the air leakage associated with the motor 161. In an embodiment, the motor cover 564 exposes the rotating shaft 619, allowing the connection portion 629 to be connected to the rotating shaft 619.

In an embodiment illustrated by FIG. 6, the connection portion 629 comprises a long axis portion 629a. The long axis portion 629a is configured to enable the rotating shaft 619 to undergo axial movement in the long axis direction of the long axis portion 629a but maintain the connection of the long axis portion 629a and the rotating shaft 619 of the motor 161. The meshing teeth portion 628 is disposed around the long axis portion 629a. The gear module 162 further comprises a first gear 621 and a second gear 622. The first gear 621 is directly or indirectly connected to the meshing teeth portion 628 of the connection portion 629. The second gear 622 is directly or indirectly connected to the first gear 621. The connection portion 629 of the motor 161 drives the first gear 621 rotating in a first rotation direction. The first gear 621 drives the second gear 622 rotating in a second rotation direction opposite to the first rotation direction. The first gear 621 has a first eccentric shaft 621a, and the first eccentric shaft 621a is connected to the first cleaning device 81. The second gear 622 has a second eccentric shaft 622a, and the second eccentric shaft 622a is connected to the second cleaning device 82.

In an embodiment illustrated by FIG. 3, the first cleaning device 81 has third guide portions, for example, guide slots 821c, extending in a third direction F3 and a fourth direction F4 and connected to the first eccentric shaft 621a. The second cleaning device 82 has fourth guide portions extending in the third direction F3 and the fourth direction F4 and connected to the second eccentric shaft 622a. The third direction F3 is not parallel to the first direction F1 but is opposite to the fourth direction F4. Preferably, the third direction F3 is substantially perpendicular to the first direction F1.

In an embodiment, the first eccentric shaft 621a has a slider 621c (as shown in FIG. 6), and the third guide portion is the guide slot 821c (as shown in FIG. 3), with the slider 621c disposed in the guide slot 821c. In an embodiment, the second eccentric shaft 622a has a bearing 622b, and the third guide portion is the guide slot 821c, allowing the bearing 622b to be disposed in the guide slot 821c.

In an embodiment illustrated by FIG. 6, the first eccentric shaft 621a has a bearing 621b and a slider 621c. The slider 621c is disposed around the bearing 621b. The third guide portion is the guide slot 821c, and the slider 621c is disposed in the guide slot 821c of the first cleaning device 81. In an embodiment, the second eccentric shaft 622a has a bearing 622b and a slider 622c. The slider 622c is disposed around the bearing 622b. The slider 622c is disposed in the guide slot 821c of the second cleaning device 82.

In an embodiment illustrated by FIG. 3, a first guide portion is disposed on the first cleaning device 81 and extended in the first direction F1 or the second direction F2, whereas a second guide portion is disposed on the second cleaning device 82 and extended in the first direction F1 or the second direction F2. As shown in FIG. 3, the first guide portion and the second guide portion are at least one slender guide post 259. The guide post 259 extends in the first direction F1 or the second direction F2.

The guide posts 259 forming the first and second guide portions are connected to the body 11 to guide the first cleaning device 81 and the second cleaning device 82 undergoing a reciprocating motion in the first direction F1 or the second direction F2. In an embodiment illustrated by FIG. 3, the body 11 further comprises a first suction cup cover 815 and a second suction cup cover 825. The first suction cup cover 815 and the second suction cup cover 825 are disposed on the first side (the upper surface) of the carrying board 120. The first cleaning device 81 and the second cleaning device 82 are disposed on the second side (the lower surface) of the carrying board 120. The first suction cup cover 815 and the second suction cup cover 825 are fixed to the first suction cup wall portion 813 and the second suction cup wall portion 823, allowing the first cleaning device 81 and the second cleaning device 82 to be attached to the carrying board 120. The first suction cup cover 815 and the second suction cup cover 825 define at least one slender guide slot 859. The guide slot 859 extends in the first direction F1 or the second direction F2. The at least one guide post 259 is inserted into the at least one guide slot 859 respectively and is movable within the at least one guide slot 859 respectively.

In an embodiment, the body 11 further comprises a bottom board 130. The bottom board 130 is disposed near an upper portion of the body 11. The bottom board 130 comprises the bottom board wall portion 131 enclosing the first bottom board through hole 550a. The carrying board 120 is disposed between the first cleaning device 81 and the bottom board 130 and disposed between the second cleaning device 82 and the bottom board 130. The carrying board 120 is connected to the bottom board 130. The carrying board 120 comprises the carrying board wall portion 121 enclosing the carrying board through hole 550b. The bottom board wall portion 131 and the carrying board wall portion 121 are attached to each other. The bottom board wall portion 131 can move relative to the carrying board wall portion 121. The carrying board through hole 550b and the first bottom board through hole 550a form the primary suction space 550.

In an embodiment, the motor 161 is disposed on the bottom board 130 to minimize the weight of the carrying board 120, allowing the carrying board 120 to move relative to the bottom board 130.

In an embodiment, the first cleaning device 81 defines a first subsidiary space 551, allowing the first subsidiary space 551 to come into communication with the primary suction space 550 and the primary suction space 550 to form an airtight space when the first cleaning device 81 comes into contact with the pane surface 40A. The second cleaning device 82 defines a second subsidiary space 552, allowing the second subsidiary space 552 to come into communication with the primary suction space 550 and the primary suction space 550 to form an airtight space when the second cleaning device 82 comes into contact with the pane surface 40A. The walking module 12 is disposed outside the first subsidiary space 551 and the second subsidiary space 552.

In an embodiment, the walking module 12 is disposed outside the first cleaning device 81 and the second cleaning device 82. The walking module 12 is not in contact with the first cleaning device 81 and the second cleaning device 82 while the first cleaning device 81 and the second cleaning device 82 are undergoing a reciprocating motion.

In an embodiment, the carrying board 120 defines a first penetrating hole 251 and a second penetrating hole 252. The first cleaning device 81 comprises a first suction cup wall portion 813 enclosing the first subsidiary space 551. The first suction cup wall portion 813 is configured to be inserted into the first penetrating hole 251 and undergo a reciprocating motion within the first penetrating hole 251. The second cleaning device 82 comprises a second suction cup wall portion 823 enclosing the second subsidiary space 552. The second suction cup wall portion 823 is configured to be inserted into the second penetrating hole 252 and undergo a reciprocating motion within the second penetrating hole 252.

In an embodiment, the first cleaning device 81 comprises a first suction cup 811 and a first cleaning fabric 812. The first suction cup 811 defines the first subsidiary space 551 and is connected to the driving device 16. The first cleaning fabric 812 is disposed at the first suction cup 811. The second cleaning device 82 comprises a second suction cup 821 and a second cleaning fabric 822. The second suction cup 821 defines the second subsidiary space 552 and is connected to the driving device 16. The second cleaning fabric 822 is disposed at the second suction cup 821.

In an embodiment, the first cleaning fabric 812 and the second cleaning fabric 822 expose the first subsidiary space 551 and the second subsidiary space 552 respectively, or the first cleaning fabric 812 and the second cleaning fabric 822 cover the first subsidiary space 551 and the second subsidiary space 552 respectively, and both the first cleaning fabric 812 and second cleaning fabric 822 are made of a gas-permeable material.

In an embodiment, the first subsidiary space 551 and the second subsidiary space 552, which are in communication with the primary suction space 550, undergo a reciprocating motion in response to the reciprocating motion of the first cleaning device 81 and second cleaning device 82 and maintain the state of the primary suction space 550 being an airtight space. The window cleaning machine 10 dispenses with any static cleaning device not moving relative to the body 11 while being in contact with the pane surface 40A being cleaned during the cleaning process.

### [Fifth Embodiment]

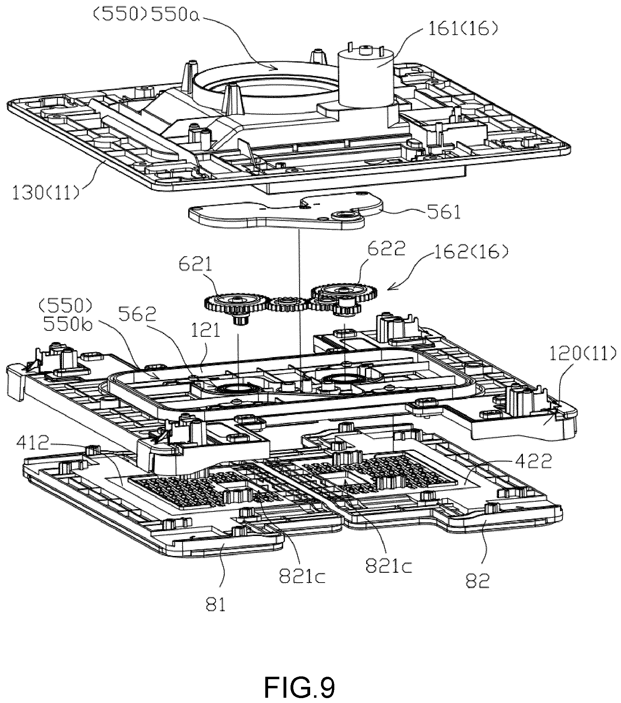

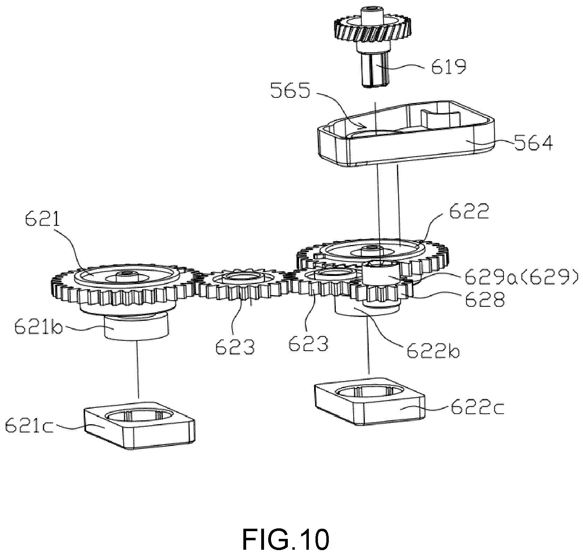

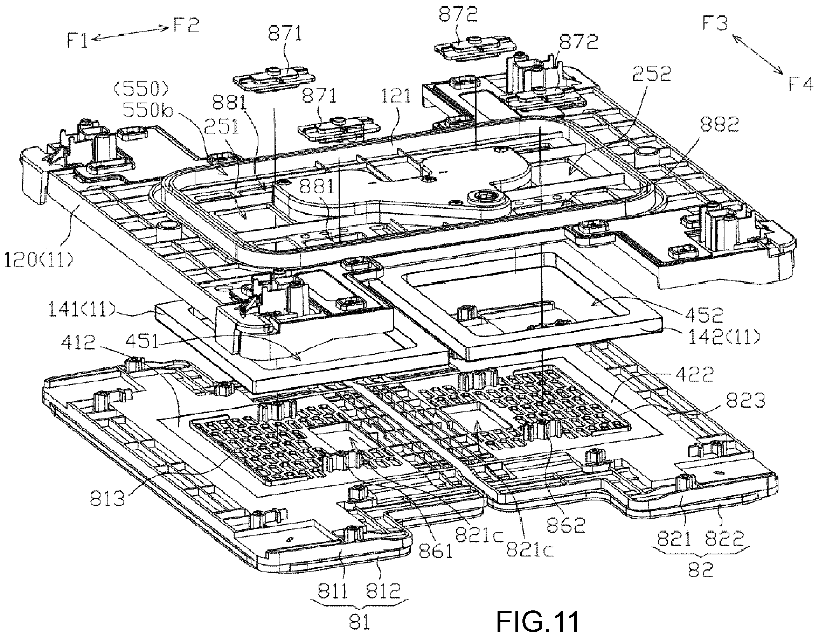

FIG. 9 is an exploded view of the window cleaning machine in an embodiment of the disclosure, showing the bottom board, carrying board, first cleaning device and second cleaning device. FIG. 10 is an exploded view of the driving device in an embodiment of the disclosure. FIG. 11 is an exploded view of the window cleaning machine in an embodiment of the disclosure, showing the carrying board, first cleaning device and second cleaning device. The embodiment illustrated by FIG. 9 is similar to the embodiment illustrated by FIG. 5. The embodiment illustrated by FIG. 10 is similar to the embodiment illustrated by FIG. 6. The embodiment illustrated by FIG. 11 is similar to the embodiment illustrated by FIG. 3. Therefore, like components are denoted by like reference numerals but are not reiterated. One or more differences between two similar embodiments are described below.

In an embodiment illustrated by FIG. 11, the carrying board 120 defines a first penetrating hole 251 and a second penetrating hole 252 which penetrate the carrying board 120. The first cleaning device 81 comprises a first suction cup 811 and a first cleaning fabric 812. The first suction cup 811 is connected to the driving device 16. The first cleaning fabric 812 is disposed on the lower surface of the first suction cup 811. The first suction cup wall portion 813 is disposed on the upper surface of the first suction cup 811 and protrudes in the direction of the carrying board 120. Preferably, the protrusion of the first suction cup wall portion 813 protruding toward the first penetrating hole 251 of the carrying board 120 only partially encloses the first subsidiary space 551. In an embodiment, the first suction cup wall portion 813 is of a smaller height, and the first suction cup wall portion 813 is not inserted into the first penetrating hole 251. The second cleaning device 82 comprises a second suction cup 821 and a second cleaning fabric 822. The second suction cup 821 is connected to the driving device 16. The second cleaning fabric 822 is disposed on the lower surface of the second suction cup 821. The second suction cup wall portion 823 is disposed on the upper surface of the second suction cup 821 and protrudes in the direction of the carrying board 120. Preferably, the protrusion of the second suction cup wall portion 823 protruding toward the second penetrating hole 252 of the carrying board 120 only partially encloses the second subsidiary space 552. In an embodiment, the second suction cup wall portion 823 is of a smaller height, and the second suction cup wall portion 823 is not inserted into the second penetrating hole 252.

In an embodiment, the body 11 further comprises a first resilient member 141 and a second resilient member 142. The first resilient member 141 is disposed between the first suction cup 811 of the first cleaning device 81 and the carrying board 120. The second resilient member 142 is disposed between the second suction cup 831 of the second cleaning device 82 and the carrying board 120. The first resilient member 141 defines a first through hole 451. The first suction cup wall portion 813 is inserted into the first through hole 451 and adapted to position the first resilient member 141 in place. In an embodiment, when the first cleaning device 81 is attached to the carrying board 120, not only do the carrying board 120, the first suction cup 811 and the first resilient member 141 jointly define the first subsidiary space 551, but the first cleaning device 81 and the carrying board 120 also partially compress the first resilient member 141. The second resilient member 142 defines a second through hole 452. The second suction cup wall portion 823 is disposed in the second through hole 452 and adapted to position the second resilient member 142 in place. In an embodiment, when the second cleaning device 82 is attached to the carrying board 120, not only do the carrying board 120, second suction cup 821 and second resilient member 142 jointly define the second subsidiary space 552, but the second cleaning device 82 and the carrying board 120 also partially compress the second resilient member 142.

As shown in FIG. 10, the gear module 162 comprises a first gear 621, at least one intermediate gear 623 and a second gear 622. The intermediate gear 623 is connected between the first gear 621 and the second gear 622. The first gear 621 has a first eccentric shaft 621a, and the first eccentric shaft 621a is connected to the first cleaning device 81. The first eccentric shaft 621a is penetratingly disposed at the bearing 621b. The bearing 621b is penetratingly disposed at the slider 621c. The slider 621c is movably disposed in the guide slot 821c of the first cleaning device 81. The second gear 622 is indirectly connected to the first gear 621 through at least one intermediate gear 623 and has a second eccentric shaft 622a. The second eccentric shaft 622a is connected to the second cleaning device 82. The second eccentric shaft 622a has the bearing 622b. The bearing 622b is penetratingly disposed at the slider 622c. The slider 622c is movably disposed in the guide slot 821c of the second cleaning device 82. The motor 161 drives the first gear 621 rotating in a first rotation direction. The first gear 621 drives the second gear 622 rotating in a second rotation direction opposite to the first rotation direction, through the two intermediate gears 623.

As shown in FIG. 9 and FIG. 11, a third guide portion, such as the guide slot 821c, is disposed on the first cleaning device 81, whereas a fourth guide portion, such as the guide slot 821c, is disposed on the second cleaning device 82. The third guide portion and the fourth guide portion extend in the third direction F3 and the fourth direction F4 respectively. The slider 621c and the slider 622c are disposed in the guide slot 821c of the first cleaning device 81 and the guide slot 821c of the second cleaning device 82 respectively.

The first cleaning device 81 comprises a first guide portion. The second cleaning device 82 comprises a second guide portion. The first guide portion and the second guide portion extend in the first direction F1 or the second direction F2 respectively. As shown in FIG. 11, at least one first fixing wall portion 861 functioning as the first guide portion is disposed on the upper surface of the first suction cup 811 and adapted to protrude in the direction of the carrying board 120, whereas at least one second fixing wall portion 862 functioning as the second guide portion is disposed on the upper surface of the second suction cup 821 and adapted to protrude in the direction of the carrying board 120.

At least one first slider 871 and at least one second slider 872 are disposed at different positions on the upper surface of the carrying board 120 respectively. The carrying board 120 defines thereon at least one first rail 881 and at least one second rail 882. The first slider 871 is configured to move within the first rail 881, and the second slider 872 is configured to move within the second rail 882, with the at least one first slider 871 corresponding in position to and being fixed to at least one first fixing wall portion 861 respectively, and the at least one second slider 872 corresponding in position to and being fixed to at least one second fixing wall portion 862 respectively.

In this embodiment, the first fixing wall portion 861 and the guide slot 821c of the first cleaning device 81 are disposed in the first through hole 451 (the first subsidiary space 551), whereas the second fixing wall portion 862 and the guide slot 821c of the second cleaning device 82 are disposed in the second through hole 452 (the second subsidiary space 552). Given the aforesaid arrangement, the first guide portion and at least a portion of the third guide portion are disposed in the first subsidiary space 551 such that the second guide portion and at least a portion of the fourth guide portion are disposed in the second subsidiary space 552; thus, the first subsidiary space 551 occupies a relatively large area of the first cleaning device 81, and the second subsidiary space 552 occupies a relatively large area of the second cleaning device 82, not only reducing the likelihood that the first suction cup 811 and the second suction cup 821 will bend upward, but also enabling the first suction cup 811 and the second suction cup 821 to undergo a reciprocating motion smoothly.

### [First appendix]

A window cleaning machine of the disclosure is adapted to walk across a non-horizontal pane surface and comprises a body, air extracting module, first cleaning device, second cleaning device, walking module, and driving device. The body defines a primary suction space. The air extracting module is disposed on the body. The air extracting module is in communication with the primary suction space. The first cleaning device is in contact with the pane surface while performing a cleaning operation. The second cleaning device is in contact with the pane surface while performing a cleaning operation. The walking module is disposed near the body. The driving device is connected to the first cleaning device and the second cleaning device to cause the first cleaning device and the second cleaning device to undergo a reciprocating motion so as to wipe the pane surface back and forth. The first cleaning device defines a first subsidiary space, allowing the first subsidiary space to come into communication with the primary suction space and the primary suction space to form an airtight space when the first cleaning device comes into contact with the pane surface. The second cleaning device defines a second subsidiary space, allowing the second subsidiary space to come into communication with the primary suction space and the primary suction space to form an airtight space when the second cleaning device comes into contact with the pane surface. The walking module is disposed outside the first subsidiary space and the second subsidiary space.

In an embodiment, the walking module is disposed outside the first cleaning device and the second cleaning device, and the walking module is not in contact with the first cleaning device and the second cleaning device while the first cleaning device and the second cleaning device are undergoing a reciprocating motion.

In an embodiment, the driving device causes the first cleaning device to undergo a reciprocating motion in a first direction and causes the second cleaning device to undergo a reciprocating motion in a second direction opposite to the first direction.

In an embodiment, the body further comprises a carrying board, and the first cleaning device and the second cleaning device are configured to undergo a reciprocating motion relative to the carrying board.

In an embodiment, the carrying board defines a first penetrating hole and a second penetrating hole. The first cleaning device comprises a first suction cup wall portion enclosing the first subsidiary space. The first suction cup wall portion is configured to be inserted into the first penetrating hole and undergo a reciprocating motion within the first penetrating hole. The second cleaning device comprises a second suction cup wall portion enclosing the second subsidiary space. The second suction cup wall portion is configured to be inserted into the second penetrating hole and undergo a reciprocating motion within the second penetrating hole.

In an embodiment, the body further comprises a first resilient member and a second resilient member. The first resilient member is disposed between the first cleaning device and the carrying board. The first resilient member defines a first through hole, and the first suction cup wall portion is disposed in the first through hole. The second resilient member is disposed between the second cleaning device and the carrying board. The second resilient member defines a second through hole, and the second suction cup wall portion is disposed in the second through hole.

In an embodiment, when attached to the carrying board, the first cleaning device partially compresses the first resilient member to reduce external air passing between the first cleaning device and the carrying board and entering the primary suction space. When attached to the carrying board, the second cleaning device partially compresses the second resilient member to reduce external air passing between the second cleaning device and the carrying board and entering the primary suction space.

In an embodiment, the first cleaning device comprises a first suction cup and a first cleaning fabric. The first suction cup defines a first subsidiary space and is connected to the driving device. The first cleaning fabric is disposed at the first suction cup. The second cleaning device comprises a second suction cup and a second cleaning fabric. The second suction cup defines the second subsidiary space and is connected to the driving device. The second cleaning fabric is disposed at the second suction cup.

In an embodiment, the first cleaning fabric and the second cleaning fabric expose the first subsidiary space and the second subsidiary space respectively, or the first cleaning fabric and the second cleaning fabric cover the first subsidiary space and the second subsidiary space respectively, and both the first cleaning fabric and the second cleaning fabric are made of a gas-permeable material.

In an embodiment, the body further comprises a bottom board. The bottom board is disposed near an upper portion of the body. The bottom board comprises a bottom board wall portion enclosing a first bottom board through hole. The carrying board is disposed between the first cleaning device and the bottom board and disposed between the second cleaning device and the bottom board. The carrying board is connected to the bottom board. The carrying board comprises a carrying board wall portion enclosing a carrying board through hole. The bottom board wall portion and the carrying board wall portion are attached to each other. The bottom board wall portion can move relative to the carrying board wall portion. The carrying board through hole and the first bottom board through hole form the primary suction space.

In an embodiment, the first subsidiary space and the second subsidiary space, which are in communication with the primary suction space, undergo a reciprocating motion in response to the reciprocating motion of the first cleaning device and the second cleaning device and maintain the state of the primary suction space being an airtight space. The window cleaning machine dispenses with any static cleaning device not moving relative to the body while being in contact with the pane surface being cleaned during the cleaning process.

Compared with conventional window cleaner robots, a window cleaning machine provided according to an embodiment of the disclosure cleans a non-horizontal pane surface more efficiently and clings firmly to the non-horizontal pane surface by suction while its cleaning devices are undergoing a reciprocating motion to wipe the pane surface back and forth.

### [Second appendix]

A window cleaning machine provided according to an embodiment of the disclosure has a trilayer structure comprising a cleaning device, bottom board and carrying board, with the carrying board configured to undergo axial movement relative to the bottom board. The first cleaning device is configured to undergo a planar reciprocating motion relative to the carrying board, allowing the cleaning devices to not only undergo axial movement (moving vertically) but also undergo a planar reciprocating motion (moving horizontally).

The window cleaning machine of the disclosure is adapted to walk across a non-horizontal pane surface. The window cleaning machine comprises a body, walking module, air extracting module, first cleaning device and driving device. The body defines a primary suction space. The walking module is disposed near the body. The air extracting module is disposed on the body and is in communication with the primary suction space, allowing the body to cling to the pane surface by suction. The first cleaning device is in contact with the pane surface while performing a cleaning operation. The driving device is connected to the first cleaning device to cause the first cleaning device to undergo a reciprocating motion so as to wipe the pane surface back and forth. The body further comprises a bottom board and a carrying board. The bottom board comprises a bottom board wall portion enclosing a first bottom board through hole. The carrying board is disposed between the first cleaning device and the bottom board. The carrying board and the bottom board are connected and jointly define the primary suction space. The carrying board is configured to undergo axial movement relative to the bottom board. The first cleaning device is configured to undergo a planar reciprocating motion relative to the carrying board, allowing the cleaning devices to move not only vertically but also horizontally.

In an embodiment, the first cleaning device defines a first subsidiary space, and the first subsidiary space is in communication with the primary suction space. The first subsidiary space in communication with the primary suction space undergoes a reciprocating motion in response to the reciprocating motion of the first cleaning device. The first cleaning device is in contact with the pane surface, maintaining the state of the primary suction space being an airtight space.

In an embodiment, the carrying board comprises a carrying board wall portion enclosing a carrying board through hole. The bottom board wall portion and the carrying board wall portion are attached to each other. The bottom board wall portion can move relative to the carrying board wall portion. The carrying board through hole and the first bottom board through hole form the primary suction space.

In an embodiment, the window cleaning machine further comprises a second cleaning device. The carrying board is disposed between the second cleaning device and the bottom board. The second cleaning device is in contact with the pane surface while performing a cleaning operation. The driving device is connected to the second cleaning device to cause the second cleaning device to undergo a reciprocating motion so as to wipe the pane surface back and forth. The second cleaning device is configured to undergo a reciprocating motion relative to the carrying board. The second cleaning device defines a second subsidiary space, and the second subsidiary space is in communication with the primary suction space. The second subsidiary space in communication with the primary suction space undergoes a reciprocating motion in response to the reciprocating motion of the second cleaning device. The second cleaning device is in contact with the pane surface, maintaining the state of the primary suction space being an airtight space.

In an embodiment, the driving device causes the first cleaning device to undergo a reciprocating motion in a first direction and causes the second cleaning device to undergo a reciprocating motion in a second direction opposite to the first direction.

In an embodiment, the driving device comprises an motor and a gear module. The motor is disposed on the bottom board and comprises a rotating shaft. The motor is disposed on the bottom board to minimize the weight of the carrying board, allowing the carrying board to move relative to the bottom board. The gear module is disposed on the carrying board and comprises a connection portion. The rotating shaft of the motor is relatively movably connected to the connection portion of the gear module. The gear module is connected to the first cleaning device and the second cleaning device, allowing the first cleaning device and the second cleaning device to undergo a reciprocating motion relative to the carrying board through the motor and the gear module.

In an embodiment, the connection portion comprises a meshing teeth portion. The gear module further comprises a first gear and a second gear. The first gear is connected to the meshing teeth portion of the connection portion. The second gear is connected to the first gear. The connection portion of the motor drives the first gear rotating in a first rotation direction. The first gear drives the second gear rotating in a second rotation direction opposite to the first rotation direction. The first gear has a first eccentric shaft, and the first eccentric shaft is connected to the first cleaning device. The second gear has a second eccentric shaft, and the second eccentric shaft is connected to the second cleaning device.

In an embodiment, the carrying board defines a first penetrating hole and a second penetrating hole. The first cleaning device comprises a first suction cup wall portion enclosing the first subsidiary space. The first suction cup wall portion is configured to be inserted into the first penetrating hole and undergo a reciprocating motion within the first penetrating hole. The second cleaning device comprises a second suction cup wall portion enclosing the second subsidiary space. The second suction cup wall portion is configured to be inserted into the second penetrating hole and undergo a reciprocating motion within the second penetrating hole.

In an embodiment, the body further comprises a first resilient member and a second resilient member. The first resilient member is disposed between the first cleaning device and the carrying board. The first resilient member defines a first through hole, and the first suction cup wall portion is disposed in the first through hole. The second resilient member is disposed between the second cleaning device and the carrying board. The second resilient member defines a second through hole, and the second suction cup wall portion is disposed in the second through hole.

In an embodiment, when attached to the carrying board, the first cleaning device partially compresses the first resilient member to reduce external air passing between the first cleaning device and the carrying board and entering the primary suction space. When attached to the carrying board, the second cleaning device partially compresses the second resilient member to reduce external air passing between the second cleaning device and the carrying board and entering the primary suction space.

In an embodiment, the first cleaning device comprises a first suction cup and a first cleaning fabric. The first suction cup defines a first subsidiary space and is connected to the driving device. The first cleaning fabric is disposed at the first suction cup and exposes the first subsidiary space. The second cleaning device comprises a second suction cup and a second cleaning fabric. The second suction cup defines the second subsidiary space and is connected to the driving device. The second cleaning fabric is disposed at the second suction cup and exposes the first subsidiary space.

In an embodiment, the first cleaning fabric and the second cleaning fabric expose the first subsidiary space and the second subsidiary space respectively, or the first cleaning fabric and the second cleaning fabric cover the first subsidiary space and the second subsidiary space respectively, and both the first cleaning fabric and the second cleaning fabric are made of a gas-permeable material.

### [Third appendix]

A window cleaning machine provided according to an embodiment of the disclosure comprises a resilient member disposed between a body and a first cleaning device to prevent external air from passing between the body and the first cleaning device and entering a primary suction space of the body.

In this embodiment, the window cleaning machine is adapted to walk across a non-horizontal pane surface. The window cleaning machine comprises a body, walking module, air extracting module, first cleaning device, and driving device. The body defines a primary suction space. The walking module is disposed near the body. The air extracting module is disposed on the body and is in communication with the primary suction space. The first cleaning device is in contact with the pane surface while performing a cleaning operation. The driving device is connected to the first cleaning device to drive the first cleaning device undergoing a reciprocating motion and wiping the pane surface back and forth. The first cleaning device defines a first subsidiary space, allowing the first subsidiary space to come into communication with the primary suction space and the primary suction space to form an airtight space when the first cleaning device comes into contact with the pane surface. The first cleaning device comprises a first suction cup wall portion enclosing the first subsidiary space. The body further comprises a first resilient member. The first resilient member defines a first through hole, and the first suction cup wall portion is disposed in the first through hole.

In an embodiment, the first resilient member is in contact with the first cleaning device, and at least one smooth layer is disposed between the first resilient member and the first cleaning device.

In an embodiment, the at least one smooth layer comprises a first smooth layer, whereas the first resilient member comprises a first smooth layer and a resilient layer, with the first smooth layer adhered to the resilient layer.

In an embodiment, at least one smooth layer comprises a second smooth layer. The first cleaning device comprises a second smooth layer. The first smooth layer is in contact with the second smooth layer. The first smooth layer moves relative to the second smooth layer.

In an embodiment, the first cleaning device compresses the first resilient member to reduce external air passing between the first cleaning device and the body and entering the primary suction space while the first cleaning device is undergoing a reciprocating motion relative to the body.

In an embodiment, the body further comprises a carrying board, and the carrying board defines a first penetrating hole. The first suction cup wall portion is configured to be inserted into the first penetrating hole and undergo a reciprocating motion within the first penetrating hole. The first resilient member is disposed between the first cleaning device and the carrying board. The first cleaning device is configured to undergo a reciprocating motion relative to the carrying board.

In an embodiment, the body further comprises a first suction cup cover. The first suction cup cover is disposed on the first side of the carrying board. The first cleaning device is disposed on the second side of the carrying board. The first suction cup cover is fixed to the first suction cup wall portion, allowing the first cleaning device to be attached to the carrying board.

In an embodiment, when attached to the carrying board, the first cleaning device compresses the first resilient member to reduce external air passing between the first cleaning device and the carrying board and entering the primary suction space while the first cleaning device is undergoing a reciprocating motion relative to the carrying board.

In an embodiment, the window cleaning machine further comprises a second cleaning device. The second cleaning device is in contact with the pane surface while performing a cleaning operation. The driving device is connected to the second cleaning device to cause the second cleaning device to undergo a reciprocating motion so as to wipe the pane surface back and forth. The second cleaning device defines a second subsidiary space, allowing the second subsidiary space to come into communication with the primary suction space and the primary suction space to form an airtight space when the second cleaning device comes into contact with the pane surface.

In an embodiment, the driving device causes the first cleaning device to undergo a reciprocating motion in a first direction and causes the second cleaning device to undergo a reciprocating motion in a second direction opposite to the first direction.

In an embodiment, the carrying board further defines a second penetrating hole. The second cleaning device comprises a second suction cup wall portion enclosing the second subsidiary space. The second suction cup wall portion is configured to be inserted into the second penetrating hole and undergo a reciprocating motion within the second penetrating hole. The body further comprises a second resilient member. The second resilient member is disposed between the second cleaning device and the carrying board. The second resilient member defines a second through hole, and the second suction cup wall portion is disposed in the second through hole. The body further comprises a second suction cup cover. The second suction cup cover is disposed on the first side of the carrying board. The second cleaning device is disposed on the second side of the carrying board. The second suction cup cover is fixed to the second suction cup wall portion, allowing the second cleaning device to be attached to the carrying board. When attached to the carrying board, the second cleaning device compresses the second resilient member to reduce external air passing between the second cleaning device and the carrying board and entering the primary suction space while the second cleaning device is undergoing a reciprocating motion relative to the carrying board.

In an embodiment, the first cleaning device comprises a first suction cup and a first cleaning fabric. The first suction cup defines a first subsidiary space and is connected to the driving device. The first cleaning fabric is disposed at the first suction cup. The second cleaning device comprises a second suction cup and a second cleaning fabric. The second suction cup defines a second subsidiary space and is connected to the driving device. The second cleaning fabric is disposed at the second suction cup.

In an embodiment, the body further comprises a bottom board disposed near an upper portion of the body and comprising a bottom board wall portion enclosing a first bottom board through hole. The carrying board is disposed between the first cleaning device and the bottom board and disposed between the second cleaning device and the bottom board. The carrying board is connected to the bottom board.

In an embodiment, the first cleaning fabric and the second cleaning fabric expose the first subsidiary space and the second subsidiary space respectively, or the first cleaning fabric and the second cleaning fabric cover the first subsidiary space and the second subsidiary space respectively, and both the first cleaning fabric and the second cleaning fabric are made of a gas-permeable material.

### [Fourth appendix]

A window cleaning machine provided according to an embodiment of the disclosure comprises a driving device comprising an motor and a gear module. Thus, the body of the window cleaning machine is thin, and preferably the window cleaning machine is light.

In this embodiment, the window cleaning machine walks across a non-horizontal pane surface. The window cleaning machine comprises a body, air extracting module, first cleaning device, second cleaning device, walking module, and driving device. The body defines a primary suction space. The air extracting module is disposed on the body and is in communication with the primary suction space. The first cleaning device is in contact with the pane surface while performing a cleaning operation. The second cleaning device is in contact with the pane surface while performing a cleaning operation. The walking module is disposed near the body. The driving device is connected to the first cleaning device and the second cleaning device to cause the first cleaning device to undergo a reciprocating motion in a first direction and cause the second cleaning device to undergo a reciprocating motion in a second direction opposite to the first direction so as to wipe the pane surface back and forth. The driving device comprises an motor and a gear module connected to the motor. The gear module further comprises a first gear and a second gear. The first gear has a first eccentric shaft, and the first eccentric shaft is connected to the first cleaning device. The second gear is directly or indirectly connected to the first gear and has a second eccentric shaft. The second eccentric shaft is connected to the second cleaning device. The motor drives the first gear rotating in a first rotation direction, and the first gear drives the second gear rotating in a second rotation direction opposite to the first rotation direction.

In an embodiment, the gear module is disposed in the primary suction space.

The body further comprises a carrying board. The carrying board comprises a first surface and a second surface opposing the first surface. The gear module is disposed on a first surface of the carrying board. The first cleaning device and the second cleaning device face the second surface of the carrying board. The first cleaning device and the second cleaning device are configured to undergo a reciprocating motion relative to the carrying board. Preferably, a gear cover and the carrying board define a receiving space for receiving the first gear and the second gear.

In this embodiment, a window cleaning machine is adapted to walk across a non-horizontal pane surface and comprises a body, air extracting module, first cleaning device, second cleaning device, walking module, and driving device. The body defines a primary suction space. The air extracting module is disposed on the body and is in communication with the primary suction space. The first cleaning device is in contact with the pane surface while performing a cleaning operation. The second cleaning device is in contact with the pane surface while performing a cleaning operation. The walking module is disposed near the body. The driving device is connected to the first cleaning device and the second cleaning device to cause the first cleaning device to undergo a reciprocating motion in a first direction and cause the second cleaning device to undergo a reciprocating motion in a second direction opposite to the first direction so as to wipe the pane surface back and forth. The driving device comprises an motor and a gear module. The motor comprises a rotating shaft. The gear module comprises a connection portion. The rotating shaft of the motor is capable of being axially relatively movably connected to the connection portion of the gear module to allow the motor and the gear module to move relative to each other. The gear module is connected to the first cleaning device and the second cleaning device, allowing the first cleaning device and the second cleaning device to undergo a planar reciprocating motion relative to the body through the motor and the gear module.

In an embodiment, the connection portion comprises a long axis portion. The long axis portion is configured to enable the rotating shaft to undergo axial movement in the long axis direction of the long axis portion but enable the long axis portion to stay connected to the rotating shaft of the motor. The meshing teeth portion is disposed around the long axis portion. The gear module further comprises a first gear and a second gear. The first gear is directly or indirectly connected to the meshing teeth portion of the connection portion. The second gear is directly or indirectly connected to the first gear. The connection portion of the motor drives the first gear rotating in a first rotation direction. The first gear drives the second gear rotating in a second rotation direction opposite to the first rotation direction. The first gear has a first eccentric shaft, and the first eccentric shaft is connected to the first cleaning device. The second gear has a second eccentric shaft, and the second eccentric shaft is connected to the second cleaning device.

In an embodiment, the first cleaning device has a third guide portion extended in a third direction and a fourth direction and connected to the first eccentric shaft, whereas the second cleaning device has a fourth guide portion extended in the third direction and the fourth direction and connected to the second eccentric shaft. The third direction is not parallel to the first direction, and the third direction is opposite to the fourth direction.

In an embodiment, the first eccentric shaft has a slider, and the third guide portion is a guide slot, with the slider disposed in the guide slot.

In an embodiment, the first eccentric shaft has a bearing, and the third guide portion is a guide slot, with the bearing disposed in the guide slot.

In an embodiment, the first eccentric shaft has a bearing and a slider. The slider is disposed around the bearing. The third guide portion is a guide slot, and the slider is disposed in the guide slot.

In an embodiment, the first cleaning device has a first guide portion extended in the first direction or second direction, whereas the second cleaning device has a second guide portion extended in the first direction or second direction. The first guide portion and the second guide portion are connected to the body to guide the first cleaning device and the second cleaning device undergoing a reciprocating motion in the first direction or second direction.

In an embodiment, the body further comprises a carrying board. The carrying board comprises a first surface and a second surface opposing the first surface. The gear module is disposed on the first surface of the carrying board. The first cleaning device and the second cleaning device face the second surface of the carrying board. The first cleaning device and the second cleaning device are configured to undergo a reciprocating motion relative to the carrying board.

In an embodiment, the body further comprises a bottom board. The bottom board is disposed near an upper portion of the body. The bottom board comprises a bottom board wall portion enclosing a first bottom board through hole. The carrying board is disposed between the first cleaning device and the bottom board and disposed between the second cleaning device and the bottom board. The carrying board is connected to the bottom board. The carrying board comprises a carrying board wall portion enclosing a carrying board through hole. The bottom board wall portion and the carrying board wall portion are attached to each other. The bottom board wall portion moves relative to the carrying board wall portion. The carrying board through hole and the first bottom board through hole form a primary suction space.

In an embodiment, the motor is disposed at the bottom board to reduce the weight of the carrying board and enable the carrying board to move relative to the bottom board easily.

In an embodiment, the first cleaning device defines a first subsidiary space, allowing the first subsidiary space to come into communication with the primary suction space and the primary suction space to form an airtight space when the first cleaning device comes into contact with the pane surface. The second cleaning device defines a second subsidiary space, allowing the second subsidiary space to come into communication with the primary suction space and the primary suction space to form an airtight space when the second cleaning device comes into contact with the pane surface. The walking module is disposed outside the first subsidiary space and the second subsidiary space.

In an embodiment, the walking module is disposed outside the first cleaning device and the second cleaning device. The walking module is not in contact with the first cleaning device and the second cleaning device while the first cleaning device and the second cleaning device are undergoing a reciprocating motion.

In an embodiment, the carrying board defines a first penetrating hole and a second penetrating hole. The first cleaning device comprises a first suction cup wall portion enclosing the first subsidiary space. The first suction cup wall portion is configured to be inserted into the first penetrating hole and undergo a reciprocating motion within the first penetrating hole. The second cleaning device comprises a second suction cup wall portion enclosing the second subsidiary space. The second suction cup wall portion is configured to be inserted into the second penetrating hole and undergo a reciprocating motion within the second penetrating hole.

In an embodiment, the first cleaning device comprises a first suction cup and a first cleaning fabric. The first suction cup defines the first subsidiary space and is connected to the driving device. The first cleaning fabric is disposed at the first suction cup. The second cleaning device comprises a second suction cup and a second cleaning fabric. The second suction cup defines the second subsidiary space and is connected to the driving device. The second cleaning fabric is disposed at the second suction cup.

In an embodiment, the first cleaning fabric and the second cleaning fabric expose the first subsidiary space and the second subsidiary space respectively, or the first cleaning fabric and the second cleaning fabric cover the first subsidiary space and the second subsidiary space respectively, and both the first cleaning fabric and the second cleaning fabric are made of a gas-permeable material.

In an embodiment, the first subsidiary space and the second subsidiary space, which are in communication with the primary suction space, undergo a reciprocating motion in response to the reciprocating motion of the first cleaning device and the second cleaning device and maintain the state of the primary suction space being an airtight space. The window cleaning machine dispenses with any static cleaning device not moving relative to the body while being in contact with the pane surface being cleaned during the cleaning process.

In an embodiment, at least a portion of the first guide portion and third guide portion is disposed in the first subsidiary space, and thus at least a portion of the second guide portion and fourth guide portion is disposed in the second subsidiary space.

## Claims

1. A window cleaning machine, adapted to walk across a non-horizontal pane surface, the window cleaning machine comprising:
a body defining a primary suction space;
a walking module disposed near the body;
an air extracting module disposed on the body and being in communication with the primary suction space;
a first cleaning device being in contact with the pane surface while performing a cleaning operation; and
a driving device connected to the first cleaning device to cause the first cleaning device to undergo a reciprocating motion so as to wipe the pane surface back and forth,
wherein,
the first cleaning device defines a first subsidiary space, allowing the first subsidiary space to come into communication with the primary suction space and the primary suction space to form an airtight space when the first cleaning device comes into contact with the pane surface,
the first cleaning device comprises a first suction cup wall portion enclosing the first subsidiary space,
the body further comprises a first resilient member, the first resilient member defines a first through hole, and the first suction cup wall portion is disposed in the first through hole.

2. The window cleaning machine of claim 1, wherein
the first resilient member is in contact with the first cleaning device, and at least one smooth layer is disposed between the first resilient member and the first cleaning device.

3. The window cleaning machine of claim 2, wherein
the at least one smooth layer comprises a first smooth layer,
the first resilient member comprises a first smooth layer and a resilient layer, and
the first smooth layer is adhered to the resilient layer.

4. The window cleaning machine of claim 3, wherein
the at least one smooth layer further comprises a second smooth layer,
the first cleaning device comprises a second smooth layer, the first smooth layer is in contact with the second smooth layer, and the first smooth layer moves relative to the second smooth layer.

5. The window cleaning machine of claim 1, wherein
the first cleaning device compresses the first resilient member to reduce external air passing between the first cleaning device and the body and entering the primary suction space while the first cleaning device is undergoing a reciprocating motion relative to the body.

6. The window cleaning machine of claim 1, wherein
the body further comprises a carrying board, and the carrying board defines a first penetrating hole,
the first suction cup wall portion is configured to be inserted into the first penetrating hole and undergo a reciprocating motion within the first penetrating hole,
the first resilient member is disposed between the first cleaning device and the carrying board,
the first cleaning device is configured to undergo a reciprocating motion relative to the carrying board.

7. The window cleaning machine of claim 6, wherein
the body further comprises a first suction cup cover,
the first suction cup cover is disposed on the first side of the carrying board, the first cleaning device is disposed on the second side of the carrying board, and the first suction cup cover is fixed to the first suction cup wall portion, allowing the first cleaning device to be attached to the carrying board.

8. The window cleaning machine of claim 6, wherein
when attached to the carrying board, the first cleaning device compresses the first resilient member to reduce external air passing between the first cleaning device and the carrying board and entering the primary suction space while the first cleaning device is undergoing a reciprocating motion relative to the carrying board.

9. The window cleaning machine of claim 6, wherein
the window cleaning machine further comprises a second cleaning device,
the second cleaning device is in contact with the pane surface while performing a cleaning operation,
the driving device is connected to the second cleaning device to cause the second cleaning device to undergo a reciprocating motion so as to wipe the pane surface back and forth,
the second cleaning device defines a second subsidiary space, allowing the second subsidiary space to come into communication with the primary suction space and the primary suction space to form an airtight space when the second cleaning device comes into contact with the pane surface.

10. The window cleaning machine of claim 9, wherein
the driving device causes the first cleaning device to undergo a reciprocating motion in a first direction and causes the second cleaning device to undergo a reciprocating motion in a second direction opposite to the first direction.

11. The window cleaning machine of claim 10, wherein
the carrying board further defines a second penetrating hole,
the second cleaning device comprises a second suction cup wall portion enclosing the second subsidiary space, and the second suction cup wall portion is configured to be inserted into the second penetrating hole and undergo a reciprocating motion within the second penetrating hole,
the body further comprises a second resilient member, the second resilient member is disposed between the second cleaning device and the carrying board, the second resilient member defines a second through hole, and the second suction cup wall portion is disposed in the second through hole,
the body further comprises a second suction cup cover, the second suction cup cover is disposed on the first side of the carrying board, the second cleaning device is disposed on the second side of the carrying board, the second suction cup cover is fixed to the second suction cup wall portion, allowing the second cleaning device to be attached to the carrying board,
when attached to the carrying board, the second cleaning device compresses the second resilient member to reduce external air passing between the second cleaning device and the carrying board and entering the primary suction space while the second cleaning device is undergoing a reciprocating motion relative to the carrying board.

12. The window cleaning machine of claim 11, wherein
the first cleaning device comprises:
a first suction cup defining a first subsidiary space and connected to the driving device; and
a first cleaning fabric disposed at the first suction cup,
the second cleaning device comprises:
a second suction cup defining a second subsidiary space and connected to the driving device; and
a second cleaning fabric disposed at the second suction cup.

13. The window cleaning machine of claim 12, wherein
the body further comprises a bottom board disposed near an upper portion of the body and comprising a bottom board wall portion enclosing a first bottom board through hole,
the carrying board is disposed between the first cleaning device and the bottom board and disposed between the second cleaning device and the bottom board,
the carrying board is connected to the bottom board,
the carrying board comprises a carrying board wall portion enclosing a carrying board through hole,
the bottom board wall portion and the carrying board wall portion are attached to each other, and the bottom board wall portion is configured to move relative to the carrying board wall portion, and
the carrying board through hole and the first bottom board through hole form the primary suction space.

14. The window cleaning machine of claim 12, wherein
the first cleaning fabric and the second cleaning fabric expose the first subsidiary space and the second subsidiary space respectively, or
the first cleaning fabric and the second cleaning fabric cover the first subsidiary space and the second subsidiary space respectively, and both the first cleaning fabric and the second cleaning fabric are made of a gas-permeable material.
